# EUROPEAN PATENT APPLICATION

(11) **EP 4 589 379 A1**
(43) Date of publication of application: **23.07.2025**
(21) Application number: 23865681.3
(22) Date of filing: 30.06.2023
(51) Int. Cl.: G03B 3/10, G03B 13/36, G03B 5/04, G03B 17/12, H04N 23/54, H04N 23/55, G02B 7/09, G02B 7/10, H02K 33/18

(54) **LENS-DRIVING DEVICE, CAMERA DEVICE, AND OPTICAL DEVICE**

(30) Priority: 15.09.2022 KR 20220116711; 20.02.2023 KR 20230022430
(71) Applicant: LG INNOTEK CO. LTD, Gangseo-gu Seoul 07796 (KR)
(72) Inventor: LEE, Sung Guk, Seoul 07796 (KR)
(74) Representative: DREISS Patentanwälte PartG mbB
(86) International application number: PCT/KR2023/009204
(87) International publication number: WO 2024/058377

(57) **Abstract**

The present embodiment relates to a lens-driving device comprising: a fixed unit; a first moving unit disposed in the fixed unit; a second moving unit disposed in the first moving unit; a third moving unit disposed in the second moving unit; a first drive unit which moves the first moving unit in a first direction perpendicular to the optical axis direction; a second drive unit which moves the second moving unit in a second direction perpendicular to the optical axis direction and the first direction; and a third drive unit which moves the third moving unit in the optical axis direction.

## Description

### [Technical Field]

The present embodiment relates to a lens-driving device, a camera device, and an optical device.

### [Background Art]

A camera device is a device that photographs a picture or video of a subject, and is installed in optical instruments such as smartphones, drones, and vehicles.

An auto-focus function that automatically adjusts the focus according to the distance of the subject is applied to the camera device. In addition, a handshake correction function is applied to prevent a phenomenon in which the focus is shaken by the user's handshake.

However, in order to arrange configurations such as magnets and coils for performing the auto-focus function and the handshake correction function, a larger size than the thickness of the smartphone is required in the optical axis direction, so there is a problem that the camera device mounted on the smartphone is more protruded than other portions of the smartphone.
(Patent Literature 1) KR 10-2015-0118005 A

### [Detailed Description of the Invention]

### [Technical Subject]

The present embodiment is to provide a camera device whose size in the optical axis direction is minimized even though it has an auto-focus function and a handshake correction function.

Furthermore, it is intended to provide a camera device in which the amount of current being consumed when driving the auto-focus (AF) is minimized.

### [Technical Solution]

A lens-driving device according to the present embodiment may comprise: a fixed unit; a first moving unit being disposed inside the fixed unit; a second moving unit being disposed inside the first moving unit; a third moving unit being disposed inside the second moving unit; a first drive unit which moves the first moving unit in a first direction perpendicular to the optical axis direction; a second drive unit which moves the second moving unit in a second direction perpendicular to the optical axis direction and the first direction; and a third drive unit which moves the third moving unit in the optical axis direction.

When the first moving unit is moved by the first drive unit, the second moving unit and the third moving unit can move together with the first moving unit.

When the second moving unit is moved by the second drive unit, the third moving unit can move together with the second moving unit.

The third drive unit comprises a third coil and a third magnet that interact with each other, and when the second moving unit and the third moving unit are moved by the second drive unit, the distance between the facing surfaces of the third coil and the third magnet can be changed.

The lens-driving device may comprise a first ball being disposed between the first moving unit and the fixed unit in the second direction.

The fixed unit comprises a groove, the first moving unit comprises a first groove, the first ball is disposed between the groove of the fixed unit and the first groove of the first moving unit, and at least one of the groove of the fixed unit and the first groove of the first moving unit can be extended in the first direction longer than the diameter of the first ball.

The first moving unit comprises a first portion being disposed between the second moving unit and the fixed unit in the first direction, and a second ball can be disposed between the first portion of the first moving unit and the second moving unit in the first direction.

The first moving unit comprises a second groove being formed in the first portion of the first moving unit, the second moving unit comprises a first groove, the second ball is disposed between the second groove of the first moving unit and the first groove of the second moving unit, and at least one of the second groove of the first moving unit and the first groove of the second moving unit can be extended in the second direction longer than the diameter of the second ball.

The second moving unit comprises a first portion being disposed between the third moving unit and the fixed unit in the second direction, and a third ball can be disposed between the first portion of the second moving unit and the third moving unit in the second direction.

The second moving unit comprises a second groove being formed in the first portion of the second moving unit, the third moving unit comprises a groove, the third ball is disposed between the second groove of the second moving unit and the groove of the third moving unit, and at least one of the second groove of the second moving unit and the groove of the third moving unit can be extended longer than the diameter of the third ball in the optical axis direction.

The fixed unit comprises a substrate, the first drive unit comprises a first magnet being disposed on the first moving unit, and a first coil being disposed at a position corresponding to the first magnet in the substrate, and at least a portion of the first ball can be overlapped with the first magnet in the first direction.

The fixed unit comprises a substrate, the second drive unit comprises a second magnet being disposed in the second moving unit, and a second coil being disposed at a position corresponding to the second magnet in the substrate, and at least a portion of the second ball can be overlapped with the second magnet in the second direction.

The fixed unit comprises a substrate, the third drive unit comprises a third magnet being disposed on the third moving unit, and a third coil disposed on the substrate at a position corresponding to the third magnet, and at least a portion of the third ball can be overlapped with the third magnet in the first direction.

The first drive unit may comprise a first magnet being disposed in the first moving unit, and a first yoke in which an attractive force act the first magnet may be disposed in the fixed unit.

The second drive unit may comprise a second magnet being disposed in the second moving unit, and a second yoke that exerts an attractive force on the second magnet may be disposed in the first moving unit.

The second yoke may comprise a first portion being disposed on one side of the second magnet in the second direction, and a second portion being disposed on the other side of the second magnet in the second direction, and the second magnet may comprise a chamfer surface being formed at a corner closest to each of the first portion and the second portion of the second yoke.

The third drive unit may comprise a third magnet disposed in the third moving unit, and a third yoke that exerts an attractive force on the third magnet may be disposed in the second moving unit.

The third yoke may comprise a first portion being disposed on one side of the third magnet in the first direction, and a second portion being disposed on the other side of the third magnet in the first direction, and the third magnet may comprise a chamfer surface being formed at an edge closest to each of the first portion and the second portion of the third yoke.

A camera device according to the present embodiment may comprise a printed circuit board; an image sensor being disposed in the printed circuit board; the lens-driving device being disposed in the printed circuit board; and a lens being coupled to the lens-driving device.

An optical device according to the present embodiment may comprise a main body; the camera device being disposed in the main body; and a display being disposed in the main body and outputting at least one of an image and a video photographed by the camera device.

### [Advantageous Effects]

Through the present embodiment, an auto focus function and an image stabilization function can be performed in a camera device with a size minimized in an optical axis direction.

That is, according to the present embodiment, both the auto focus function and the handshake correction function can be performed even though the camera device is not protruded from the smartphone.

Furthermore, through the present embodiment, a camera device having a minimized size in horizontal and vertical directions perpendicular to an optical axis can be provided.

In addition, the amount of current consumed during auto focus (AF) driving can be minimized, which can increase the usage time of the smartphone.

### [Brief Description of Drawings]

FIG. 1 is a perspective view of a lens-driving device according to the present embodiment.
FIG. 2 is a cross-sectional view taken along line A-A of FIG. 1.
FIG. 3 is a cross-sectional view taken along line B-B of FIG. 1.
FIG. 4 is a cross-sectional view taken along line C-C of FIG. 1.
FIG. 5 is a cross-sectional view taken along line D-D of FIG. 1.
FIG. 6 is a cross-sectional view taken along line A-B of FIG. 1 according to the present embodiment, cut in a direction perpendicular to the optical axis and viewed from above.
FIG. 7 is a cross-sectional view taken along line A-B of FIG. 1 according to the present embodiment, cut in a direction perpendicular to the optical axis and viewed from above so that an OIS guide ball is visible.
FIG. 8 is an exploded perspective view of a lens-driving device according to the present embodiment.
FIG. 9 is an exploded perspective view taken from a different direction from FIG. 8.
FIG. 10 is a perspective view of a lens-driving device according to the present embodiment with a cover removed.
FIG. 11 is a perspective view of FIG. 10 with the moving unit removed.
FIG. 12 is a perspective view of FIG. 11 viewed from a different direction.
FIG. 13 is a perspective view illustrating a moving unit of a lens-driving device according to the present embodiment.
FIG. 14 is a perspective view of FIG. 13 viewed from a different direction.
FIG. 15 is a bottom view of a lens-driving device according to the present embodiment.
FIG. 16 is a perspective view illustrating a first moving unit and related components of a lens-driving device according to the present embodiment.
FIG. 17 is a perspective view illustrating a second moving unit and related components of a lens-driving device according to the present embodiment.
FIG. 18 is a perspective view of FIG. 17 viewed from a different direction.
FIG. 19 is a perspective view illustrating a third moving unit and related components of a lens-driving device according to the present embodiment.
FIG. 20 is a perspective view illustrating a substrate, coil, and related components of a lens-driving device according to the present embodiment.
FIG. 21 is a perspective view illustrating a coil and a magnet of a lens-driving device according to the present embodiment.
FIG. 22 is a cross-sectional perspective view of a lens-driving device according to a modified embodiment.
FIG. 23 is a perspective view illustrating a moving unit and related components of a lens-driving device according to a modified embodiment.
FIG. 24 is a perspective view illustrating a coil, a magnet, a yoke, a ball, and a sensor of a lens-driving device according to a modified embodiment.
FIG. 25 is a perspective view illustrating a moving unit and related components of a lens-driving device according to a modified embodiment from a different direction than FIG. 23.
FIG. 26 is a perspective view illustrating an AF magnet, an AF yoke, an AF guide ball, and an AF sensor of a lens-driving device according to a modified embodiment.

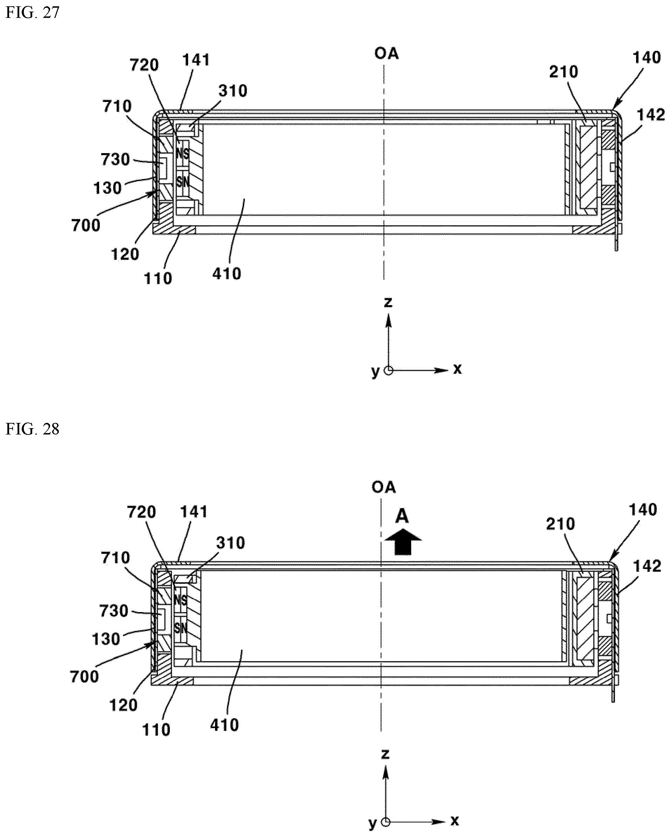

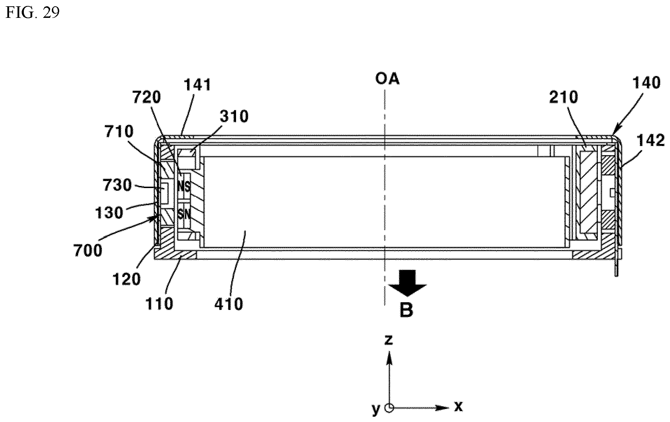

FIGS. 27 to 29 are diagrams for explaining an auto focus driving of a lens-driving device according to the present embodiment. FIG. 27 is a cross-sectional view illustrating an appearance of the AF moving unit in an initial state in which no current is applied to an AF coil. FIG. 28 is a cross-sectional view illustrating an appearance in which an AF moving unit moves upward in an optical axis direction when a forward current is applied to an AF coil. FIG. 29 is a cross-sectional view illustrating an appearance in which an AF moving unit moves downward in an optical axis direction when a reverse current is applied to an AF coil.

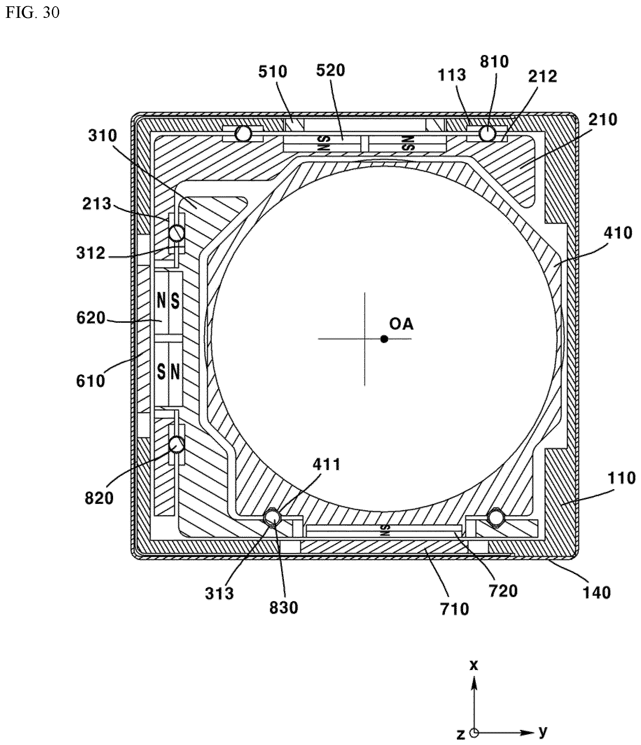

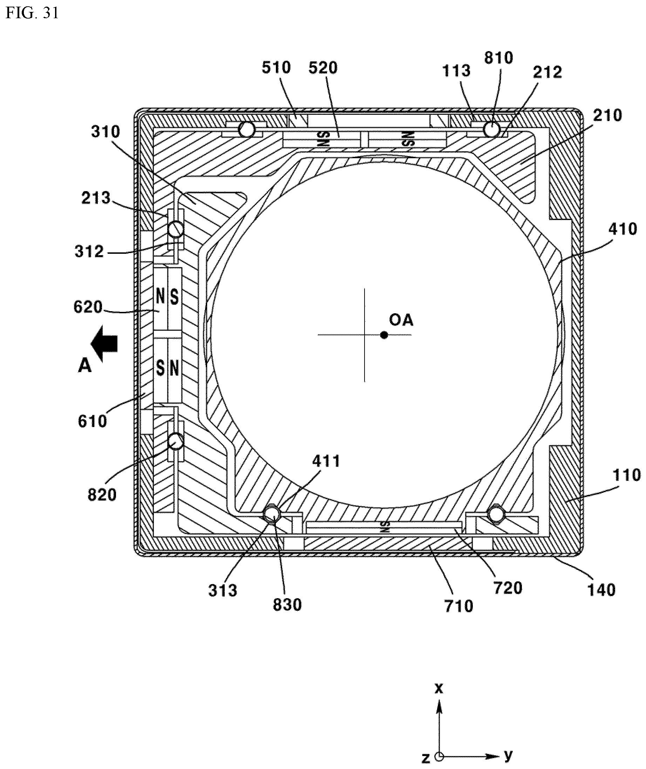

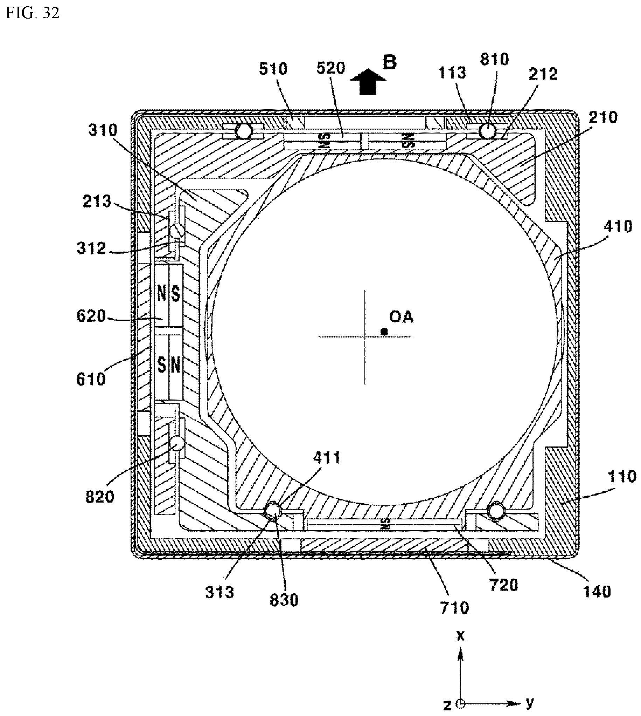

FIGS. 30 to 32 are diagrams for explaining a handshake correction driving of a lens-driving device according to the present embodiment. FIG. 30 is a cross-sectional view illustrating the appearance of a moving unit in an initial state in which no current is applied to an OIS-y coil and an OIS-x coil. FIG. 31 is a cross-sectional view illustrating an appearance in which an OIS-x moving unit, an OIS-y moving unit, and an AF moving unit that have been moved in a y-axis direction perpendicular to the optical axis when current is applied to an OIS-y coil. FIG. 32 is a cross-sectional view illustrating an appearance in which an OIS-x moving unit and an AF moving unit that have been moved in an x-axis direction perpendicular to the optical axis when current is applied to an OIS-x coil.
FIG. 33 is an exploded perspective view of a camera device according to the present embodiment.
FIG. 34 is a perspective view of an optical device according to the present embodiment.
FIG. 35 is a perspective view of an optical device according to a modified embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or disposed in "on (above)" or "below (under)" of each component, "on (above)" or "below (under)" means that it comprises not only the case where the two components are directly in contact with, but also the case where one or more other components are formed or disposed between the two components. In addition, when expressed as "on (above)" or "below (under)", the meaning of not only an upward direction but also a downward direction with respect to one component may be comprised.

The 'optical axis (see OA of FIG. 27) direction' used hereinafter is defined as an optical axis direction of a lens and/or image sensor being coupled to a lens-driving device.

The 'vertical direction' used hereinafter may be a direction parallel to or the same as an optical axis direction. The vertical direction may correspond to a 'z-axis direction'. The 'horizontal direction' used hereinafter may be a direction perpendicular to a vertical direction. That is, a horizontal direction may be a direction perpendicular to the optical axis. Therefore, a horizontal direction may comprise an 'x-axis direction' and a 'y-axis direction'.

The 'auto focus (AF) function' used hereinafter is defined as a function that automatically focuses on a subject by adjusting the distance from an image sensor by moving the lens in an optical axis direction according to the distance of the subject so that a clear image of the subject can be obtained on an image sensor. In addition, 'closed-loop auto focus (CLAF) control' is defined as detecting the distance between an image sensor and a lens and controlling the position of the lens through feedback in real time in order to improve the accuracy of focus adjustment.

The 'optical image stabilization (OIS) function' used hereinafter is defined as a function that moves or tilts a lens in a direction perpendicular to the optical axis to offset handshake in order to prevent an image or video from shaking due to the user's handshake. In addition, 'closed-loop auto focus (CLAF) control' is defined as detecting the position of a lens with respect to an image sensor and controlling the feedback of the lens position in real time in order to improve the accuracy of handshake correction.

Hereinafter, any one among an "OIS-y moving unit **200",** an "OIS-x moving unit **300",** and an "AF moving unit **400"** may be referred to as a "first moving unit", the other may be referred to as a "second moving unit", and yet the other may be referred to as a "third moving unit".

Hereinafter, any one among an "OIS-y drive unit **500",** an "OIS-x drive unit **600",** and an "AF drive unit **700"** may be referred to as a "first drive unit", the other may be referred to as a "second drive unit", and yet the other may be referred to as a "third drive unit".

Hereinafter, any one among an "OIS-y coil **510",** an "OIS-x coil **610",** and an "AF coil **710"** may be referred to as a "first coil", the other may be referred to as a "second coil", and yet the other may be referred to as a "third coil".

Hereinafter, any one among an "OIS-y magnet **520",** an "OIS-x magnet **620",** and an "AF magnet **720"** may be referred to as a "first magnet", the other may be referred to as a "second magnet", and yet the other may be referred to as a "third magnet".

Hereinafter, any one among an "OIS-y sensor **530",** an "OIS-x sensor **630",** and an "AF sensor **730"** may be referred to as a "first sensor", the other may be referred to as a "second sensor", and yet the other may be referred to as a "third sensor".

Hereinafter, any one among an "OIS-y guide ball **810",** an "OIS-x guide ball **820",** and an "AF guide ball **830"** may be referred to as a "first ball", the other may be referred to as a "second ball", and yet the other may be referred to as a "third ball".

Hereinafter, any one of an "x-axis direction" and a "y-axis direction" may be referred to as a "first direction" and the other may be referred to as a "second direction".

Hereinafter, any one among an "OIS-y yoke **131",** an "OIS-x yoke **132",** and an "AF yoke **133"** may be referred to as a "first yoke", the other may be referred to as a "second yoke", and yet the other may be referred to as a "third yoke".

Hereinafter, any one among an "OIS-y yoke **910",** an "OIS-x yoke **920",** and an "AF yoke **930"** may be referred to as a "first yoke", the other may be referred to as a "second yoke", and yet the other may be referred to as a "third yoke".

Hereinafter, a configuration of a lens-driving device according to the present embodiment is described with reference to the drawings.

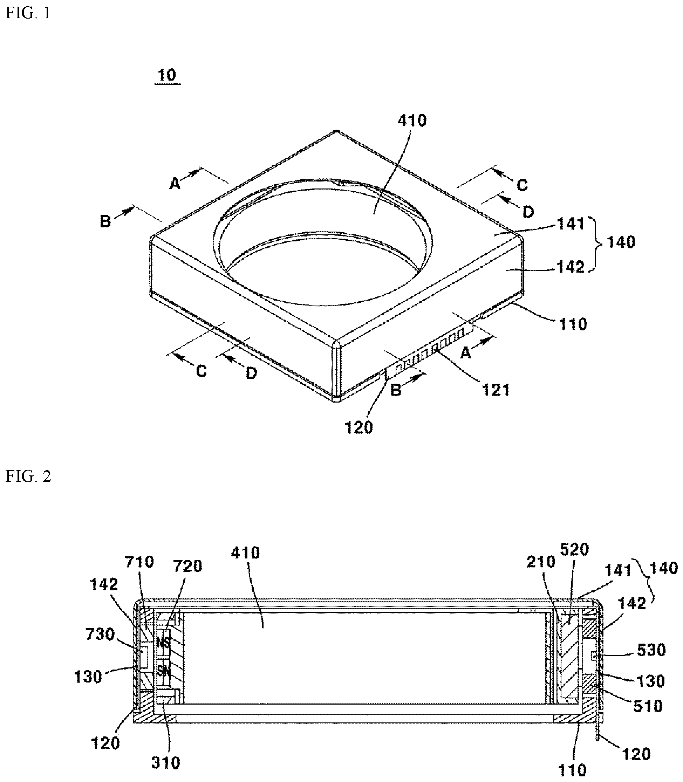

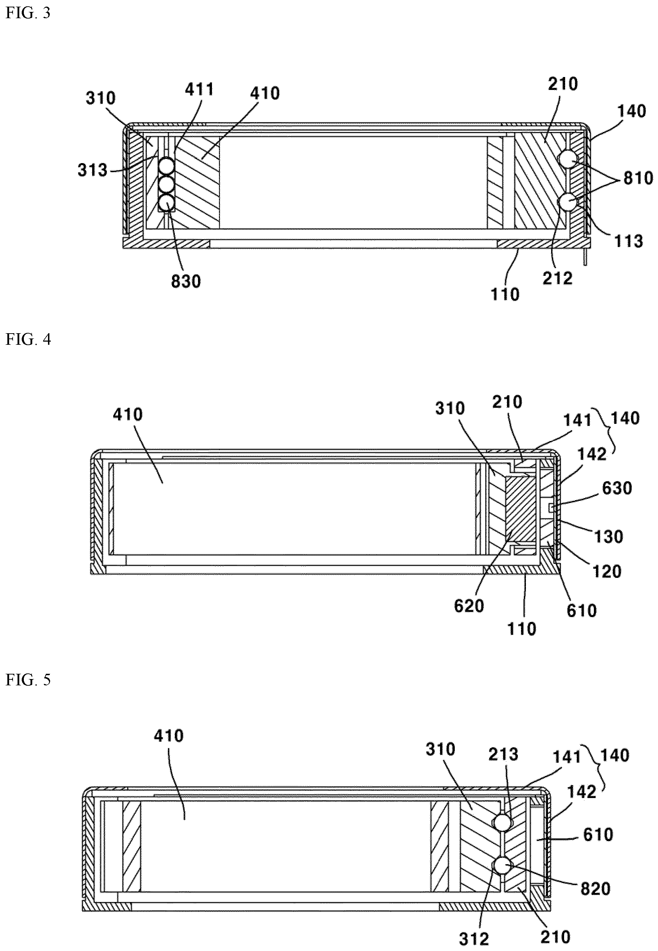

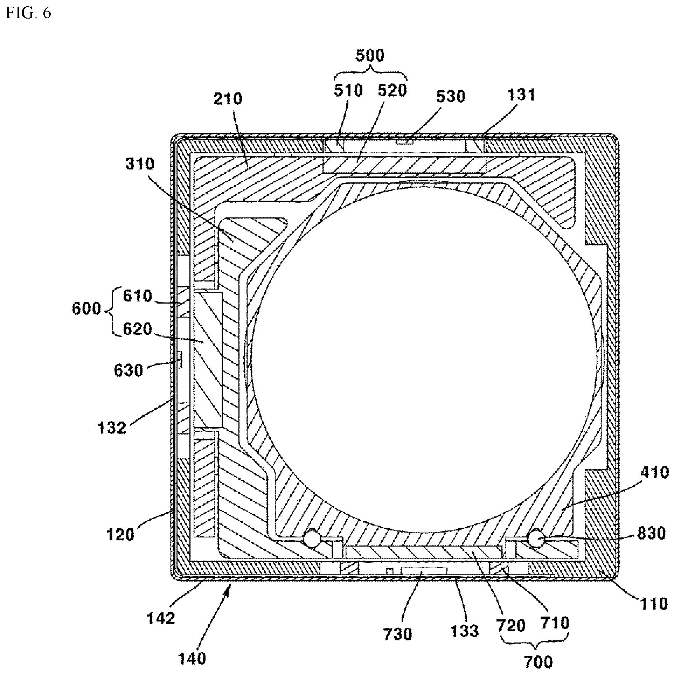

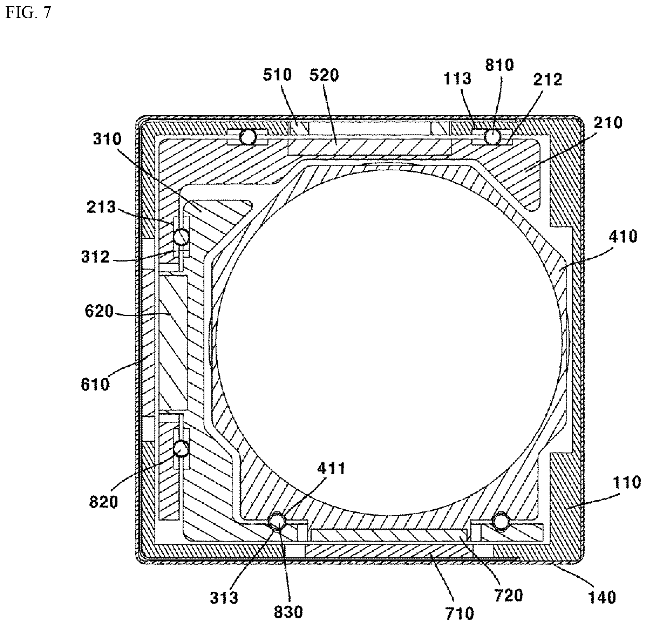

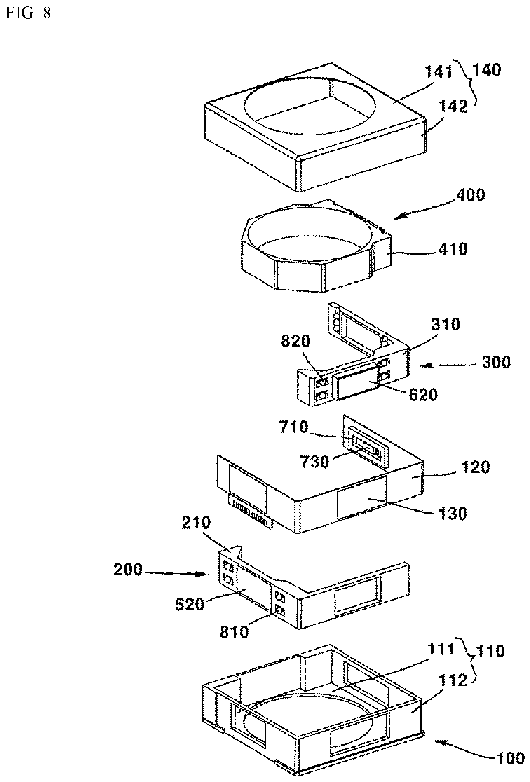

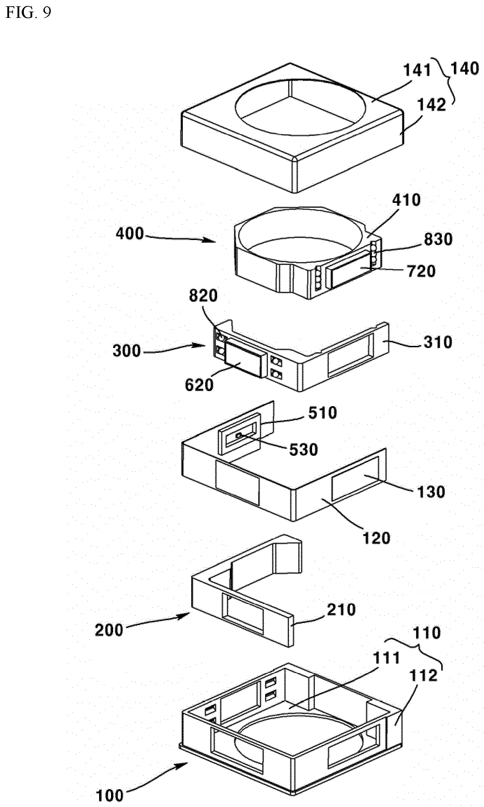

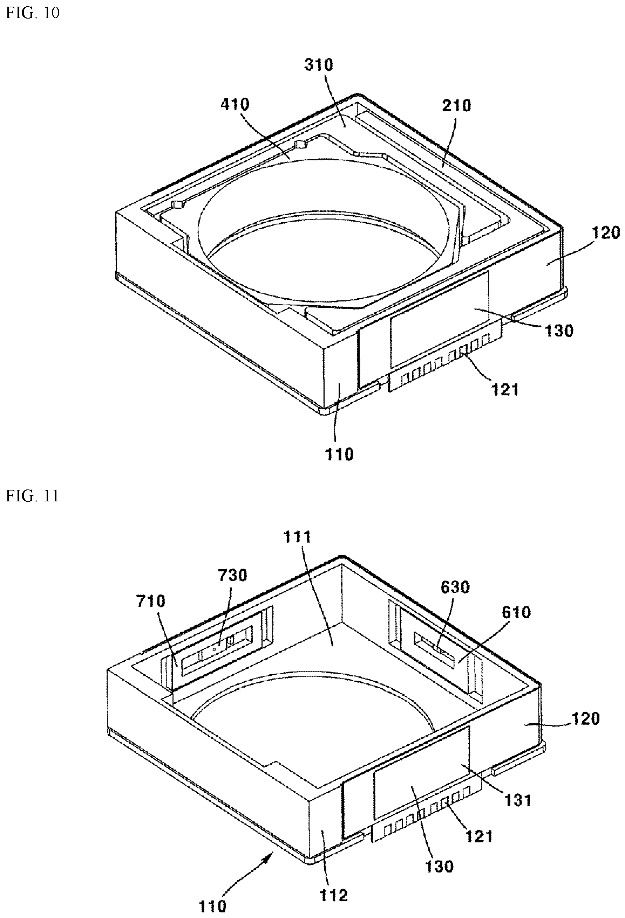

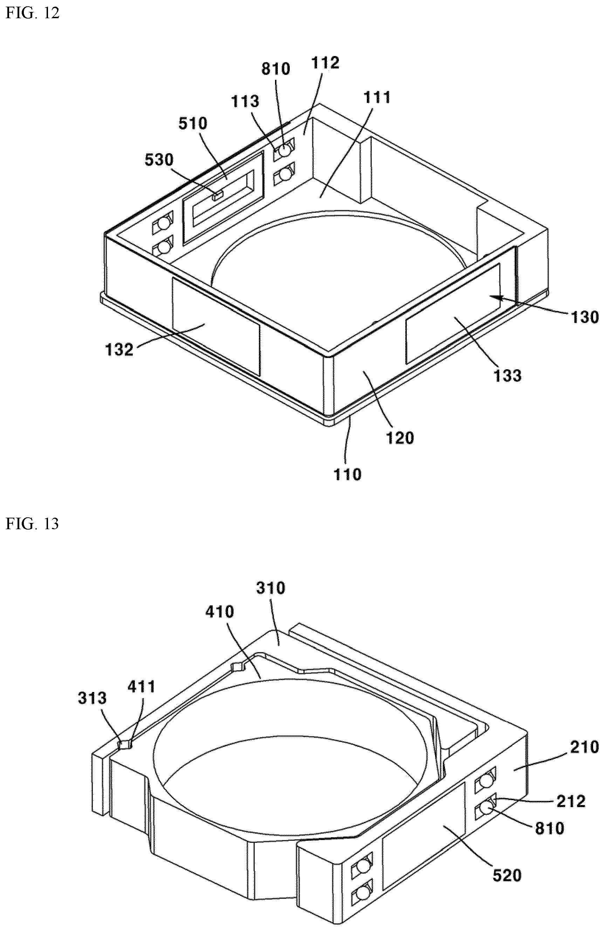

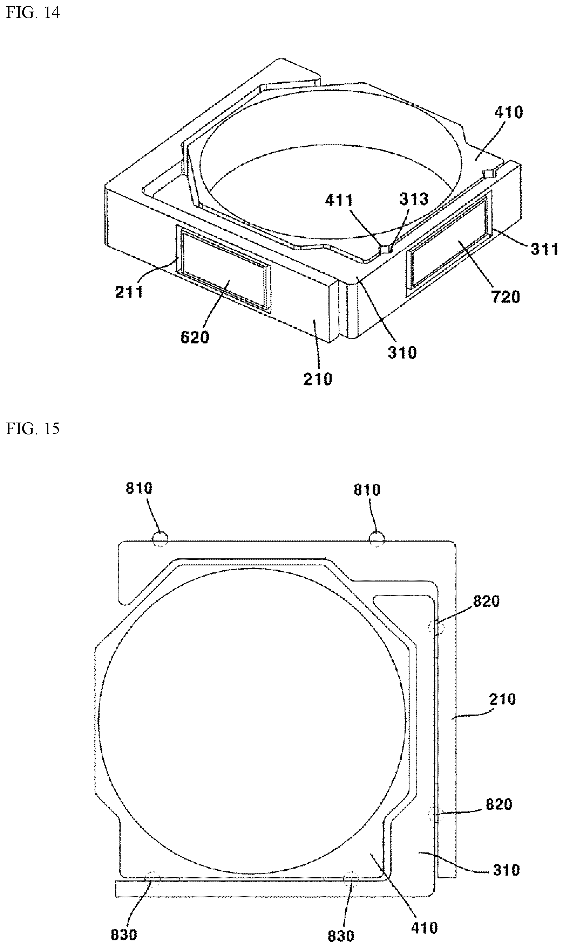

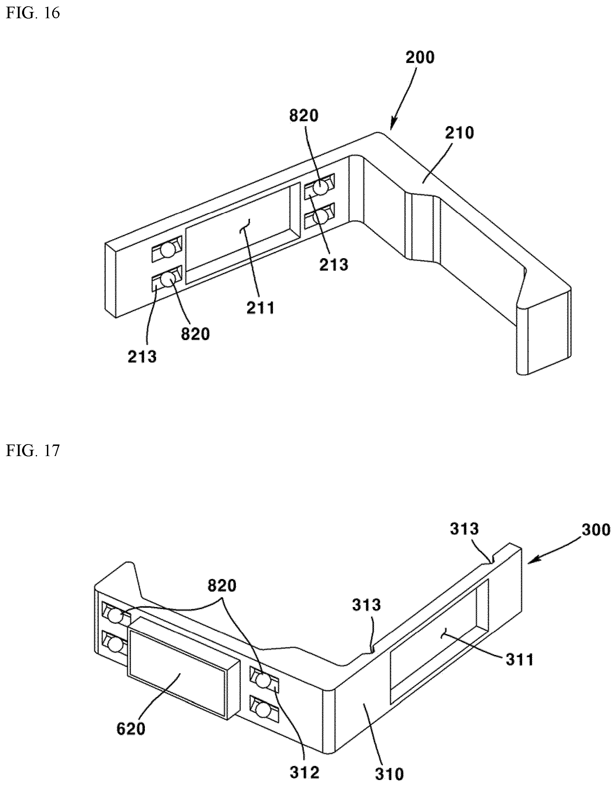

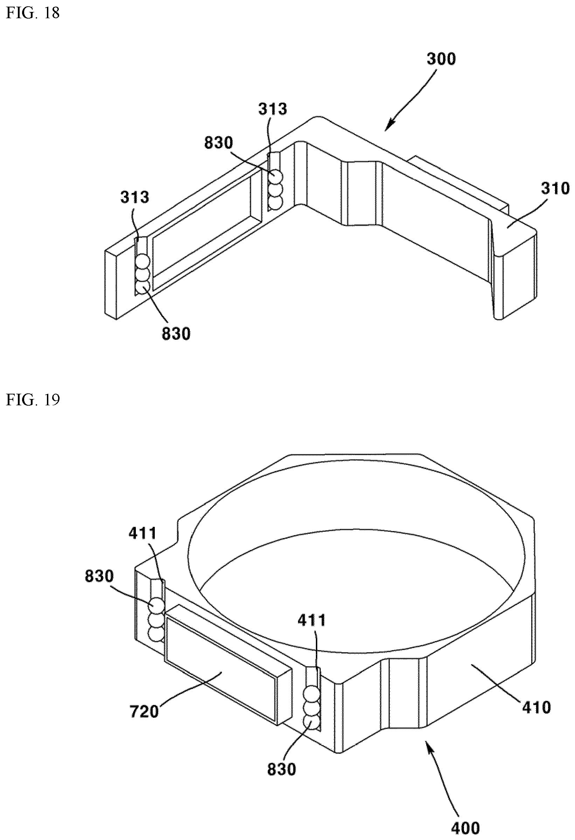

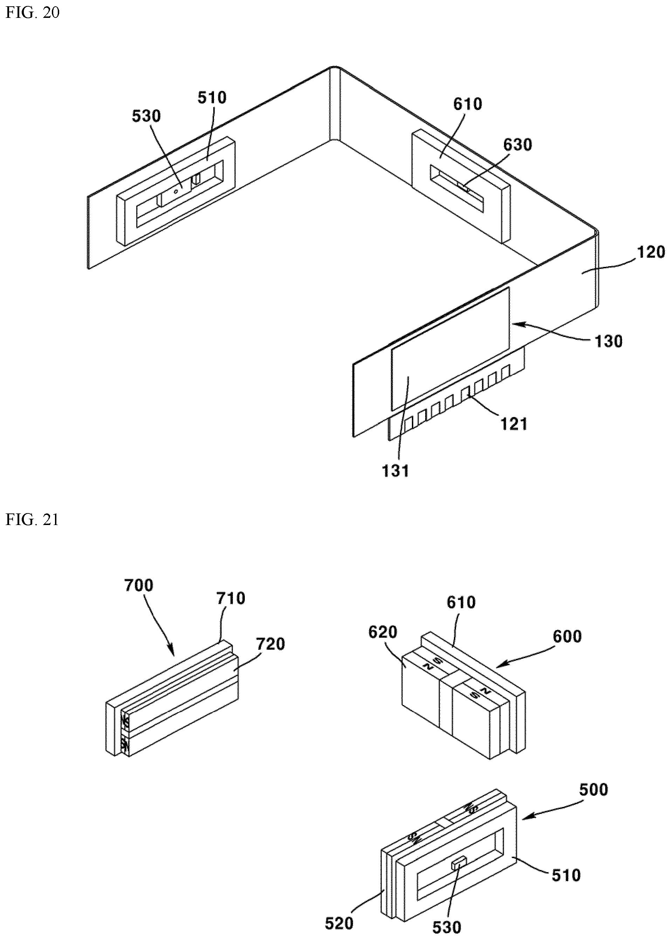

FIG. 1 is a perspective view of a lens-driving device according to the present embodiment; FIG. 2 is a cross-sectional view taken along line A-A of FIG. 1; FIG. 3 is a cross-sectional view taken along line B-B of FIG. 1; FIG. 4 is a cross-sectional view taken along line C-C of FIG. 1; FIG. 5 is a cross-sectional view taken along line D-D of FIG. 1; FIG. 6 is a cross-sectional view taken along line A-B of FIG. 1 according to the present embodiment, cut in a direction perpendicular to the optical axis and viewed from above; FIG. 7 is a cross-sectional view taken along line A-B of FIG. 1 according to the present embodiment, cut in a direction perpendicular to the optical axis and viewed from above so that an OIS guide ball is visible; FIG. 8 is an exploded perspective view of a lens-driving device according to the present embodiment; FIG. 9 is an exploded perspective view taken from a different direction from FIG. 8; FIG. 10 is a perspective view of a lens-driving device according to the present embodiment with a cover removed; FIG. 11 is a perspective view of FIG. 10 with the moving unit removed; FIG. 12 is a perspective view of FIG. 11 viewed from a different direction; FIG. 13 is a perspective view illustrating a moving unit of a lens-driving device according to the present embodiment; FIG. 14 is a perspective view of FIG. 13 viewed from a different direction; FIG. 15 is a bottom view of a lens-driving device according to the present embodiment; FIG. 16 is a perspective view illustrating a first moving unit and related components of a lens-driving device according to the present embodiment; FIG. 17 is a perspective view illustrating a second moving unit and related components of a lens-driving device according to the present embodiment; FIG. 18 is a perspective view of FIG. 17 viewed from a different direction; FIG. 19 is a perspective view illustrating a third moving unit and related components of a lens-driving device according to the present embodiment; FIG. 20 is a perspective view illustrating a substrate, coil, and related components of a lens-driving device according to the present embodiment; and FIG. 21 is a perspective view illustrating a coil and a magnet of a lens-driving device according to the present embodiment.

The lens-driving device **10** may be a voice coil motor (VCM). The lens-driving device **10** may be a lens driving motor. The lens-driving device **10** may be a lens driving actuator. The lens-driving device **10** may comprise an AF module. The lens-driving device **10** may comprise an OIS module.

The lens-driving device **10** may comprise a fixed unit **100.** The fixed unit **100** may be a portion that is relatively fixed when the moving unit moves. The moving unit may move with respect to the fixed unit **100.**

The lens-driving device **10** may comprise a base **110.** The fixed unit **100** may comprise a base **110.** The base **110** may be disposed under the OIS-y holder **210.** The base **110** may be disposed under the OIS-x holder **310.** The base **110** may be disposed under the AF holder **410.** The base **110** may be coupled with the cover **140.** The OIS-y holder **210,** the OIS-x holder **310,** and the AF holder **410** may be disposed on the base **110.** The OIS-y holder **210,** the OIS-x holder **310,** and the AF holder **410** may be disposed on the lower plate **111** of the base **110.** The OIS-y holder **210,** the OIS-x holder **310,** and the AF holder **410** can be disposed inside the base **110.** The OIS-y holder **210,** the OIS-x holder **310,** and the AF holder **410** can be disposed inside the side plate **112** of the base **110.**

The base **110** may comprise a lower plate **111.** The base **110** may comprise a side plate **112.** The side plate **112** of the base **110** may be a 'side portion'. The side plate **112** of the base **110** may be extended from an upper surface of the lower plate **111.** The side plate **112** of the base **110** may comprise a plurality of side plates. The side plate **112** of the base **110** may comprise four side plates. The base **110** may comprise a first side portion and a second side portion which are disposed opposite to each other, and a third side portion and a fourth side portion which are disposed opposite to each other. At this time, the OIS-x coil **610** may be disposed at a position corresponding to a third side portion of the base **110.** The distance between an optical axis and a fourth side portion of the base **110** may be closer than the distance between an optical axis and a third side portion of the base **110.** That is, the optical axis may be disposed to be offset from the central axis of the base **110** toward a fourth side portion of the base **110.**

The base **110** may comprise a groove **113.** The groove **113** may be an 'OIS-y guide ball accommodating groove'. An OIS-y guide ball **810** may be disposed in the groove **113.** The groove **113** may be in direct contact with the OIS-y guide ball **810.** The groove **113** may be disposed in a y-axis direction perpendicular to the optical axis. The groove **113** may comprise a plurality of grooves. The groove **113** may comprise four grooves. The four grooves may be disposed parallel to each other. The groove **113** may comprise a first groove being in contact with the OIS-y guide ball **810** at two points, and a second groove being in contact with the OIS-y guide ball **810** at one point. As a modified embodiment, both a first groove and a second groove may be in contact with the OIS-y guide ball **810** at two points.

The lens-driving device **10** may comprise a substrate **120.** The fixed unit **100** may comprise a substrate **120.** The substrate **120** may be disposed in a base **110.** The substrate **120** may be disposed in a side plate **112** of the base **110.** The substrate **120** may be disposed on an outer surface of a side plate **142** of a cover **140.** The substrate **120** may be disposed parallel to an optical axis. The substrate **120** may be a circuit board. The substrate **120** may be a printed circuit board. The substrate **120** may comprise a flexible printed circuit board (FPCB). The substrate **120** may be flexible. The substrate **120** may be bent. The substrate **120** may be bent multiple times. The substrate **120** can be bent twice.

The substrate **120** may comprise a first portion and a third portion being disposed on opposite sides, and a second portion which connects the first portion and the third portion. At this time, the OIS-y coil **510** may be disposed in a first portion of the substrate **120.** The OIS-x coil **610** may be disposed in a second portion of the substrate **120.** The AF coil **710** may be disposed in a third portion of the substrate **120.**

The substrate **120** may comprise a body portion. Coils **510, 610,** and **710** may be disposed in the body portion. The substrate **120** may comprise a terminal portion **121.** The terminal portion **121** may be extended downward from the body portion. The terminal portion **121** may be formed at a lower end portion of the substrate **120.** The terminal portion **121** may be protruded downward from the base **110.** The terminal portion **121** may comprise a terminal.

The terminal portion **121** may comprise a plurality of terminals. The terminal of the substrate **120** may be electrically connected to the coils **510, 610,** and **710.** The terminal of the substrate **120** may be electrically connected to the OIS-y coil **510.** The terminal of the substrate **120** may be electrically connected to the OIS-x coil **610.** The terminal of the substrate **120** may be electrically connected to the AF coil **710.** The terminal of the substrate **120** may be electrically connected to the sensors **530, 630,** and **730.** The terminal of the substrate **120** may be electrically connected to the OIS-y sensor **530.** The terminal of the substrate **120** may be electrically connected to the OIS-x sensor **630.** The terminal of the substrate **120** may be electrically connected to the AF sensor **730.** The terminal portion **121** can be coupled to a printed circuit board **50.** The terminal portion **121** can be coupled to the printed circuit board **50** via solder. The terminal portion **121** can be coupled to the printed circuit board **50** via a conductive member.

The lens-driving device **10** may comprise a yoke **130.** The fixed unit **100** may comprise a yoke **130.** The yoke **130** may be an 'attractive force member'. The yoke **130** may be a 'ball pressure member'. The yoke **130** may be formed of metal. A force may be generated between the yoke **130** and the magnets **520, 620,** and **720.** The balls **810, 820,** and **830** may be pressed by the force between the yoke **130** and the magnets **520, 620,** and **720.** The yoke **130** may be disposed in the substrate **120.** The yoke **130** may be disposed on an outer side surface of the substrate **120.**

The yoke **130** may comprise a plurality of yokes. The yoke **130** may comprise three yokes. The yoke **130** may comprise an OIS-y yoke **131,** an OIS-x yoke **132,** and an AF yoke **133.** The OIS-y yoke **131,** the OIS-x yoke **132,** and the AF yoke **133** may be spaced apart from one another.

The yoke **130** may comprise an OIS-y yoke **131.** The OIS-y yoke **131** may be disposed in the first portion of the substrate **120.** The OIS-y yoke **131** may be disposed on an outer surface of the first portion of the substrate **120.** The OIS-y yoke **131** may be disposed at a position corresponding to the OIS-y magnet **520.** An attractive force may be generated between the OIS-y yoke **131** and the OIS-y magnet **520.** The OIS-y guide ball **810** may be pressurized by the attractive force between the OIS-y yoke **131** and the OIS-y magnet **520.** The OIS-y guide ball **810** can be pressurized between the OIS-y holder **210** and the base **110** by the attractive force between the OIS-y yoke **131** and the OIS-y magnet **520.**

The yoke **130** may comprise an OIS-x yoke **132.** The OIS-x yoke **132** may be disposed in the second portion of the substrate **120.** The OIS-x yoke **132** may be disposed on an outer surface of the second portion of the substrate **120.** The OIS-x yoke **132** may be disposed at a position corresponding to the OIS-x magnet **620.** An attractive force may be generated between the OIS-x yoke **132** and the OIS-x magnet 620. The OIS-x guide ball **820** may be pressurized by the attractive force between the OIS-x yoke **132** and the OIS-x magnet **620.** The OIS-x guide ball **820** can be pressurized between the OIS-x holder **310** and the OIS-y holder **210** by the attractive force between the OIS-x yoke **132** and the OIS-x magnet **620.**

The yoke **130** may comprise an AF yoke **133.** The AF yoke **133** may be disposed in the third portion of the substrate **120.** The AF yoke **133** may be disposed on an outer surface of the third portion of the substrate **120.** The AF yoke **133** may be disposed at a position corresponding to the AF magnet **720.** An attractive force may be generated between the AF yoke **133** and the AF magnet **720.** The AF guide ball **830** may be pressed by the attractive force between the AF yoke **133** and the AF magnet **720.** The AF guide ball **830** may be pressed between the AF holder **410** and the OIS-x holder **310** by the attractive force between the AF yoke **133** and the AF magnet **720.**

The lens-driving device **10** may comprise a cover **140.** The fixed unit **100** may comprise a cover **140.** The cover **140** may be disposed in the base **110.** The cover **140** may be coupled to the base **110.** The cover **140** may be fixed to the base **110.** The cover **140** may accommodate an OIS-y holder **210** therein. The cover **140** may accommodate an OIS-x holder **310** therein. The cover **140** may accommodate an AF holder **410** therein. The cover **140** may be a shield member. The cover **140** may be a shield can.

The cover **140** may comprise an upper plate **141.** The upper plate **141** may be disposed on the moving unit. The upward movement of the moving unit may be limited by the moving unit being in contact with the upper plate **141.** The upper plate **141** may comprise a hole through which light passes.

The cover **140** may comprise a side plate **142.** The side plate **142** may be extended from the upper plate **141.** The side plate **142** may be disposed on the base **110.** The side plate **142** may be disposed on a step portion being protruded from a lower end portion of an outer surface of the base **110.** The side plate **142** may comprise a plurality of side plates. The side plate **142** may comprise four side plates. The side plate **142** may comprise a first side plate and a second side plate being disposed opposite to each other, and a third side plate and a fourth side plate being disposed opposite to each other.

The lens-driving device **10** may comprise a moving unit. The moving unit may be disposed in the fixed unit **100.** The moving unit may be disposed inside the fixed unit **100.** The moving unit may be disposed on the fixed unit **100.** The moving unit may be movably disposed on the fixed unit **100.** The moving unit may be moved with respect to the fixed unit **100** by the drive unit. The moving unit may be moved during AF driving. The moving unit may be moved during OIS driving. A lens may be coupled to the moving unit.

The lens-driving device **10** may comprise an OIS-y moving unit **200.** The OIS-y moving unit **200** may be disposed in the fixed unit **100.** The OIS-y moving unit **200** may be disposed inside the fixed unit **100.** The OIS-y moving unit **200** may be disposed on the fixed unit **100.** The OIS-y moving unit **200** may be disposed between the fixed unit **100** and the OIS-x moving unit **300.** The OIS-y moving unit **200** may be disposed between the fixed unit **100** and the AF moving unit **400.** The OIS-y moving unit **200** may be movably disposed in the fixed unit **100.** The OIS-y moving unit **200** may move in a y-axis direction with respect to the fixed unit **100** by the OIS-y drive unit **500.** The OIS-y moving unit **200** can move during OIS driving.

The OIS-y moving unit **200** may comprise a first portion disposed between the OIS-x moving unit **300** and the fixed unit **100** in a y-axis direction. An OIS-x guide ball **820** may be disposed between the first portion of the OIS-y moving unit **200** and the OIS-x moving unit **300** in a y-axis direction. The OIS-y moving unit **200** may comprise a second groove **213** being formed in a first portion of the OIS-y moving unit **200.**

The lens-driving device **10** may comprise an OIS-y holder **210.** The OIS-y moving unit **200** may comprise an OIS-y holder **210.** The OIS-y holder **210** may be an 'OIS-y carrier'. The OIS-y holder **210** may be disposed inside the base **110.** The OIS-y holder **210** may be disposed on the base **110.** The OIS-y holder **210** may be disposed inside the cover **140.** The OIS-y holder **210** may be disposed between the base **110** and the OIS-x holder **310.** The OIS-y holder **210** may be disposed between the base **110** and the AF holder **410.** The OIS-y holder **210** can be disposed so as to be movable in a y-axis direction.

In an optical axis direction, the OIS-y holder **210** may not be overlapped with both the OIS-x holder **310** and the AF holder **410.** The OIS-y holder **210** may be overlapped with the OIS-x holder **310** and the AF holder **410** in a direction perpendicular to the optical axis. As a modified embodiment, a stopper may be formed in the OIS-y holder **210.** At this time, the stopper of the OIS-y holder **210** may be overlapped with at least one of the OIS-x holder **310** and the AF holder **410** in an optical axis direction.

The OIS-y holder **210** may comprise a hole **211.** The hole **211** may be an 'OIS-x holder avoidance hole'. The hole **211** may be formed on a side plate of the OIS-y holder **210.** The hole **211** may penetrate the OIS-y holder **210** in a y-axis direction. As a modified embodiment, the hole **211** may be formed as a groove being recessed from an upper surface of the OIS-y holder **210** or a groove being recessed from a lower surface. A portion of the OIS-x holder **310** may be disposed in the hole **211.** A protruded portion of the OIS-x holder **310** may be disposed in the hole **211.** An OIS-x magnet **620** may be disposed in the hole **211.**

The OIS-y holder **210** may comprise a first groove **212.** The first groove **212** may be an 'OIS-y guide ball accommodating groove'. An OIS-y guide ball **810** may be disposed in the first groove **212.** The first groove **212** may be in direct contact with the OIS-y guide ball **810.** The first groove **212** may be disposed in a y-axis direction. The first groove **212** may comprise a plurality of grooves. The first groove **212** may comprise four grooves. The four grooves may be disposed parallel to each other. The first groove **212** may comprise a first groove being in contact with the OIS-y guide ball **810** at two points, and a second groove being in contact with the OIS-y guide ball **810** at one point. In a modified embodiment, both the first groove and the second groove can come into contact with the OIS-y guide ball **810** at two points.

The OIS-y holder **210** may comprise a second groove **213.** The second groove **213** may be an 'OIS-x ball accommodating groove'. An OIS-x guide ball **820** may be disposed in the second groove **213.** The second groove **213** may be in direct contact with the OIS-x guide ball **820.** The second groove **213** may be disposed in an x-axis direction. The second groove **213** may comprise a plurality of grooves. The second groove **213** may comprise four grooves. The second groove **213** may comprise a first groove being in contact with the OIS-x guide ball **820** at two points, and a second groove being in contact with the OIS-x guide ball **820** at one point. In a modified embodiment, both the first groove and the second groove can make contact with the OIS-x guide ball **820** at two points.

The OIS-y holder **210** may comprise a groove. The groove may be an 'OIS-y magnet accommodating groove'. The groove may be formed on an outer surface of the OIS-y holder **210.** An OIS-y magnet **520** may be disposed in the groove. The groove may be formed in a shape corresponding to the OIS-y magnet **520.**

The OIS-y holder **210** may comprise a groove. The groove may be formed concavely on an inner side surface of the OIS-y holder **210.** An AF holder **410** may be disposed in the groove. An OIS-y magnet **520** may be disposed on the opposite side of the groove.

The lens-driving device **10** may comprise an OIS-x moving unit **300.** The OIS-x moving unit **300** may be disposed in the fixed unit **100.** The OIS-x moving unit **300** may be disposed inside the fixed unit **100.** The OIS-x moving unit **300** may be disposed on the fixed unit **100.** The OIS-x moving unit **300** may be disposed inside the OIS-y moving unit **200.** The OIS-x moving unit **300** may be disposed between the fixed unit **100** and the AF moving unit **400.** The OIS-x moving unit **300** may be disposed between the OIS-y moving unit **200** and the AF moving unit **400.** The OIS-x moving unit **300** may be movably disposed. The OIS-x moving unit **300** can move in an x-axis direction against the fixed unit **100** and the OIS-y moving unit **200** by the OIS-x drive unit **600.** The OIS-x moving unit **300** can move during OIS driving.

The OIS-x moving unit **300** may comprise a first portion disposed between the AF moving unit **400** and the fixed unit **100** in an x-axis direction. An AF guide ball **830** may be disposed between a first portion of the OIS-x moving unit **300** and the AF moving unit **400** in an x-axis direction. The OIS-x moving unit **300** may comprise a second groove **313** being formed in a first portion of the OIS-x moving unit **300.**

The lens-driving device **10** may comprise an OIS-x holder **310.** The OIS-x moving unit **300** may comprise an OIS-x holder **310.** The OIS-x holder **310** may be an 'OIS-x carrier'. The OIS-x holder **310** may be disposed inside the OIS-y holder **210.** The OIS-x holder **310** may be disposed inside the base **110.** The OIS-x holder **310** may be disposed on the base **110.** The OIS-x holder **310** may be disposed inside the cover **140.** The OIS-x holder **310** may be disposed between the base **110** and the AF holder **410.** The OIS-x holder **310** may be disposed between the OIS-y holder **210** and the AF holder **410.** The OIS-x holder **310** may be movably disposed in an x-axis direction. The OIS-x holder **310** may comprise a portion being disposed between the OIS-y holder **210** and the AF holder **410** in a y-axis direction.

The OIS-x holder **310** may comprise a hole **311.** The hole **311** may be an 'AF holder avoidance hole'. The hole **311** may be formed on a side plate of the OIS-x holder **310.** The hole 311 may penetrate the OIS-x holder **310** in an x-axis direction. In a modified embodiment, the hole **311** may be formed as a groove being recessed from an upper surface of the OIS-x holder **310** or a groove being recessed from a lower surface. A portion of the AF holder **410** may be disposed in the hole **311.** A protruded portion of the AF holder **410** may be disposed in the hole **311.** An AF magnet **720** may be disposed in the hole **311.**

The OIS-x holder **310** may comprise a first groove **312.** The first groove **312** may be an 'OIS-x guide ball accommodating groove'. An OIS-x guide ball **820** may be disposed in the first groove **312.** The first groove **312** may be in direct contact with the OIS-x guide ball **820.** The first groove **312** may be disposed in an x-axis direction. The first groove **312** may comprise a plurality of grooves. The first groove **312** may comprise four grooves. The first groove **312** may comprise a first groove being in contact with the OIS-x guide ball **820** at two points, and a second groove being in contact with the OIS-x guide ball **820** at one point. In a modified embodiment, both the first groove and the second groove can make contact with the OIS-x guide ball **820** at two points.

The OIS-x holder **310** may comprise a second groove **313.** The second groove **313** may be an 'AF guide ball accommodating groove'. An AF guide ball **830** may be disposed in the second groove **313.** The second groove **313** may be in direct contact with the AF guide ball **830.** The second groove **313** may be disposed in an optical axis direction. The second groove **313** may comprise a plurality of grooves. The second groove **313** may comprise two grooves. The second groove **313** may comprise a first groove being in contact with the AF guide ball **830** at two points, and a second groove being in contact with the AF guide ball **830** at one point. In a modified embodiment, both the first groove and the second groove may be in contact with the AF guide ball **830** at two points.

The OIS-x holder **310** may comprise a groove. The groove may be an 'OIS-x magnet accommodating groove'. The groove may be formed on an outer surface of the OIS-x holder **310.** An OIS-x magnet **620** may be disposed in the groove. The groove may be formed in a shape corresponding to the OIS-x magnet **620.**

The lens-driving device **10** may comprise an AF moving unit **400.** The AF moving unit **400** may be disposed in the fixed unit **100.** The AF moving unit **400** may be disposed inside the fixed unit **100.** The AF moving unit **400** may be disposed on the fixed unit **100.** The AF moving unit **400** may be disposed inside the OIS-y moving unit **200.** The AF moving unit **400** may be disposed inside the OIS-x moving unit **300.** The AF moving unit **400** may be movably disposed. The AF moving unit **400** may move in an optical axis direction against the fixed unit **100,** the OIS-y moving unit **200,** and the OIS-x moving unit **300** by the AF drive unit **700.** The AF moving unit **400** may move during AF driving.

The lens-driving device **10** may comprise an AF holder **410.** The AF moving unit **400** may comprise an AF holder **410.** The AF holder **410** may be a 'bobbin'. The AF holder **410** may be an 'AF carrier'. The AF holder **410** may be disposed inside the OIS-x holder **310.** The AF holder **410** may be disposed inside the OIS-y holder **210.** The AF holder **410** may be disposed inside the base **110.** The AF holder **410** may be disposed on the base **110.** The AF holder **410** may be disposed inside the cover **140.** The AF holder **410** may be movably disposed in an optical axis direction.

The AF holder **410** may comprise a groove **411.** The groove **411** may be an 'AF guide ball accommodating groove'. An AF guide ball **830** may be disposed in the groove **411.** The groove **411** may be in direct contact with the AF guide ball **830.** The groove **411** may be disposed in an optical axis direction. The groove **411** may comprise a plurality of grooves. The groove **411** may comprise two grooves. The groove **411** may comprise a first groove being in contact with the AF guide ball **830** at two points, and a second groove being in contact with the AF guide ball **830** at one point. In a modified embodiment, both the first groove and the second groove may be in contact with the AF guide ball **830** at two points.

The AF holder **410** may comprise a groove. The groove may be an 'AF magnet accommodating groove'. The groove may be formed on an outer surface of the AF holder **410.** An AF magnet **720** may be disposed in the groove. The groove may be formed in a shape corresponding to the AF magnet **720.**

The lens-driving device **10** may comprise a drive unit. The drive unit may move the moving unit against the fixed unit. The drive unit may comprise an AF drive unit **700.** The drive unit may comprise OIS drive units **500** and **600.** The drive unit may comprise a coil and a magnet.

The lens-driving device **10** may comprise an OIS-y drive unit **500.** The OIS-y drive unit **500** may move the OIS-y moving unit **200** in a y-axis direction perpendicular to the optical axis direction. The OIS-y drive unit **500** may move the OIS-y holder **210** in a y-axis direction. The OIS-y drive unit **500** may move the OIS-y holder **210** in a y-axis direction through electromagnetic force. The OIS-y drive unit **500** may comprise a coil and a magnet.

When the OIS-y moving unit **200** is moved by the OIS-y drive unit **500,** the OIS-x moving unit **300** and the AF moving unit **400** can move together with the OIS-y moving unit **200.** The OIS-x moving unit **300** and the AF moving unit **400** can move together with the OIS-y moving unit **200** in a y-axis direction.

The lens-driving device **10** may comprise an OIS-y coil **510.** The OIS-y drive unit **500** may comprise an OIS-y coil **510.** The OIS-y coil **510** may interact with an OIS-y magnet **520.** The OIS-y coil **510** may move the OIS-y magnet **520** in a y-axis direction. The OIS-y coil **510** may move the OIS-y magnet **520** in a y-axis direction through interaction with the OIS-y magnet **520.** The OIS-y coil **510** may face the OIS-y magnet **520.** The OIS-y coil **510** may face the OIS-y magnet **520.** The OIS-y coil **510** may be disposed at a position corresponding to the OIS-y magnet **520.** The OIS-y coil **510** may be overlapped with the OIS-y magnet **520** in an x-axis direction. The OIS-y coil **510** may be disposed in the substrate **120.** The OIS-y coil **510** may be disposed at a position corresponding to the OIS-y magnet **520** in the substrate **120.** The OIS-y coil **510** may be disposed in the base **110.** The OIS-y coil **510** may be disposed on the side plate **142** of the cover **140.** The OIS-y coil **510** may be disposed between the OIS-y magnet **520** and the cover **140.** The OIS-y coil **510** can be disposed in the fixed unit **100.**

The lens-driving device **10** may comprise an OIS-y magnet **520.** The OIS-y drive unit **500** may comprise an OIS-y magnet **520.** The OIS-y magnet **520** may be disposed in the OIS-y moving unit **200.** The OIS-y magnet **520** may be disposed in the OIS-y holder **210.** The OIS-y magnet **520** may be disposed on an outer surface of the OIS-y holder **210.** The OIS-y magnet **520** may be fixed to the OIS-y holder **210.** The OIS-y magnet **520** may be coupled to the OIS-y holder **210.** The OIS-y magnet **520** may be bonded to the OIS-y holder **210** with an adhesive. The OIS-y magnet **520** may be disposed inside the cover **140.** The OIS-y magnet **520** may interact with the OIS-y coil **510.** The OIS-y magnet **520** may electromagnetically interact with the OIS-y coil **510.** The OIS-y magnet **520** may be disposed at a position corresponding to the OIS-y coil **510.** The OIS-y magnet **520** and the OIS-y coil **510** may face each other. The OIS-y magnet **520** may face the OIS-y coil **510.** The OIS-y magnet **520** may be overlapped with the OIS-y coil **510** in a direction perpendicular to the optical axis.

The OIS-y magnet **520** may be a four-pole magnet. The OIS-y magnet **520** may comprise a four-pole magnetizing magnet. The OIS-y magnet **520** may comprise a first magnet unit comprising an N pole and an S pole, and a second magnet unit comprising an N pole and an S pole. The first magnet unit and the second magnet unit may be disposed in a horizontal direction. The first magnet unit and the second magnet unit may be disposed spaced apart from each other in a horizontal direction, and a neutral section may be disposed between the first magnet unit and the second magnet unit.

In the present embodiment, even when the OIS-y magnet **520** moves due to the interaction between the OIS-y coil **510** and the OIS-y magnet **520,** the distance between the OIS-y coil **510** and the OIS-y magnet **520** can be maintained constant.

The lens-driving device **10** may comprise an OIS-y sensor **530.** The OIS-y drive unit **500** may comprise an OIS-y sensor **530.** The OIS-y sensor **530** may be disposed in a substrate **120.** The OIS-y sensor **530** may comprise a Hall element (Hall IC). The OIS-y sensor **530** may comprise a Hall sensor. The OIS-y sensor **530** may detect an OIS-y magnet **520.** The OIS-y sensor **530** may detect a magnetic force of the OIS-y magnet **520.** The OIS-y sensor **530** may detect the movement of the OIS-y magnet **520.** The amount of movement or position of the OIS-y magnet **520** detected by the OIS-y sensor **530** can be used for feedback of the optical image stabilization (OIS) driving in a y-axis direction.

The OIS-y sensor **530** may be disposed within the OIS-y coil **510.** The OIS-y sensor **530** may be overlapped with the OIS-y coil **510** in an optical axis direction. The OIS-y sensor **530** may be overlap with the neutral portion of the OIS-y magnet **520** in an x-axis direction. In a modified embodiment, the OIS-y sensor **530** may be disposed at the outside of the OIS-y coil **510.** The OIS-y sensor **530** may face the OIS-y magnet **520.** The OIS-y sensor **530** may be disposed at a position corresponding to the OIS-y magnet **520.**

The lens-driving device **10** may comprise an OIS-x drive unit **600.** The OIS-x drive unit **600** may move the OIS-x moving unit **300** in an x-axis direction perpendicular to the optical axis direction and a y-axis direction. The OIS-x drive unit **600** may move the OIS-x holder **310** in an x-axis direction. The OIS-x drive unit **600** may move the OIS-x holder **310** in an x-axis direction through electromagnetic force. The OIS-x drive unit **600** may comprise a coil and a magnet.

When the OIS-x moving unit **300** is moved by the OIS-x drive unit **600,** the AF moving unit **400** can move together with the OIS-x moving unit **300.** The AF moving unit **400** can move together with the OIS-x moving unit **300** in an x-axis direction.

The lens-driving device **10** may comprise an OIS-x coil **610.** The OIS-x drive unit **600** may comprise an OIS-x coil **610.** The OIS-x coil **610** may interact with an OIS-x magnet **620.** The OIS-x coil **610** may move the OIS-x magnet **620** in an x-axis direction. The OIS-x coil **610** may move the OIS-x magnet **620** in an x-axis direction through interaction with the OIS-x magnet **620.** The OIS-x coil **610** and the OIS-x magnet **620** may face each other. The OIS-x coil **610** may face the OIS-x magnet **620.** The OIS-x coil **610** may be disposed at a position corresponding to the OIS-x magnet **620.** The OIS-x coil **610** may be overlapped with the OIS-x magnet **620** in a y-axis direction. The OIS-x coil **610** may be disposed in the substrate **120.** The OIS-x coil **610** may be disposed at a position corresponding to the OIS-x magnet **620** in the substrate **120.** The OIS-x coil **610** may be disposed in the base **110.** The OIS-x coil **610** may be disposed in the side plate **142** of the cover **140.** The OIS-x coil **610** may be disposed between the OIS-x magnet **620** and the cover **140.** The OIS-x coil **610** can be disposed in the fixed unit **100.**

The lens-driving device **10** may comprise an OIS-x magnet **620.** The OIS-x drive unit **600** may comprise an OIS-x magnet **620.** The OIS-x magnet **620** may be disposed in the OIS-x moving unit **300.** The OIS-x magnet **620** may be disposed in the OIS-x holder **310.** The OIS-x magnet **620** may be disposed on an outer surface of the OIS-x holder **310.** The OIS-x magnet **620** may be fixed to the OIS-x holder **310.** The OIS-x magnet **620** may be coupled to the OIS-x holder **310.** The OIS-x magnet **620** may be attached to the OIS-x holder **310** with an adhesive. The OIS-x magnet **620** may be disposed inside the cover **140.** The OIS-x magnet **620** may interact with the OIS-x coil **610.** The OIS-x magnet **620** may electromagnetically interact with the OIS-x coil **610.** The OIS-x magnet **620** may be disposed at a position corresponding to the OIS-x coil **610.** The OIS-x magnet **620** and the OIS-x coil **610** may face each other. The OIS-x magnet **620** may face the OIS-x coil **610.** The OIS-x magnet **620** may be overlapped with the OIS-x coil **610** in a direction perpendicular to the optical axis.

The OIS-x magnet **620** can be disposed in the hole **211** of the OIS-y holder **210.** The OIS-x magnet **620** can be overlapped with the OIS-y holder **210** in an x-axis direction. The OIS-x magnet **620** can be overlapped with the OIS-y holder **210** in an optical axis direction.

The OIS-x magnet **620** may be a four-pole magnet. The OIS-x magnet **620** may comprise a four-pole magnetizing magnet. The OIS-x magnet **620** may comprise a first magnet unit comprising an N pole and an S pole, and a second magnet unit comprising an N pole and an S pole. The first magnet unit and the second magnet unit may be disposed in a horizontal direction. The first magnet unit and the second magnet unit may be disposed spaced apart from each other in a horizontal direction, and a neutral portion may be disposed between the first magnet unit and the second magnet unit.

In the present embodiment, even when the OIS-x magnet **620** moves due to the interaction between the OIS-x coil **610** and the OIS-x magnet **620,** the distance between the OIS-x coil **610** and the OIS-x magnet **620** can be maintained constant.

The lens-driving device **10** may comprise an OIS-x sensor **630.** The OIS-x drive unit **600** may comprise an OIS-x sensor **630.** The OIS-x sensor **630** may be disposed in the substrate **120.** The OIS-x sensor **630** may comprise a Hall element (Hall IC). The OIS-x sensor **630** may comprise a Hall sensor. The OIS-x sensor **630** may detect an OIS-x magnet **620.** The OIS-x sensor **630** may detect a magnetic force of the OIS-x magnet **620.** The OIS-x sensor **630** may detect movement of the OIS-x magnet **620.** The amount of movement or position of the OIS-x magnet **620** detected by the OIS-x sensor **630** can be used for feedback of the optical image stabilization (OIS) drive in an x-axis direction.

The OIS-x sensor **630** may be disposed inside the OIS-x coil **610.** The OIS-x sensor **630** may be overlapped with the OIS-x coil **610** in an optical axis direction. The OIS-x sensor **630** may be overlapped with the neutral portion of the OIS-x magnet **620** in a y-axis direction. In a modified embodiment, the OIS-x sensor **630** may be disposed at the outside of the OIS-x coil 610. The OIS-x sensor **630** may face the OIS-x magnet **620.** The OIS-x sensor **630** may be disposed at a position corresponding to the OIS-x magnet **620.**

The lens-driving device **10** may comprise an AF drive unit **700.** The AF drive unit **700** may move the AF moving unit **400** in an optical axis direction. The AF drive unit **700** may move the AF holder **410** in an optical axis direction. The AF drive unit **700** may move the AF holder **410** in an optical axis direction through electromagnetic force. The AF drive unit **700** may comprise a coil and a magnet. The AF drive unit **700** may comprise a coil and a magnet interacting with each other.

When the OIS-x moving unit **300** and the AF moving unit **400** are moved by the OIS-x drive unit **600,** the distance between the facing surfaces of the AF coil **710** and the AF magnet **720** may be changed. When the OIS-y moving unit **200,** the OIS-x moving unit **300,** and the AF moving unit **400** are moved by the OIS-y drive unit **500,** the distance between the facing surfaces of the AF coil **710** and the AF magnet **720** does not vary, and the AF magnet **720** may be eccentric with respect to the AF coil **710.**

The lens-driving device **10** may comprise an AF coil **710.** The AF drive unit **700** may comprise an AF coil **710.** The AF coil **710** may interact with an AF magnet **720.** The AF coil **710** may be disposed at an opposite side of the OIS-y coil **510** with respect to the optical axis.

The AF coil **710** can move the AF magnet **720** in an optical axis direction. The AF coil **710** can move the AF magnet **720** in an optical axis direction through interaction with the AF magnet **720.** The AF coil **710** and the AF magnet **720** can face each other. The AF coil **710** can face the AF magnet **720.** The AF coil **710** can be disposed at a position corresponding to the AF magnet **720.** The AF coil **710** can be overlapped with the AF magnet **720** in an x-axis direction. The AF coil 710 can be disposed in the substrate **120.** The AF coil **710** can be disposed at a position corresponding to the AF magnet **720** in the substrate **120.** The AF coil **710** may be disposed in the base **110.** The AF coil **710** may be disposed in the side plate **142** of the cover **140.** The AF coil **710** may be disposed between the AF magnet **720** and the cover **140.** The AF coil **710** may be disposed in the fixed unit **100.**

The lens-driving device **10** may comprise an AF magnet **720.** The AF drive unit **700** may comprise an AF magnet **720.** The AF magnet **720** may be disposed in the AF moving unit **400.** The AF magnet **720** may be disposed in the AF holder **410.** The AF magnet **720** may be disposed at an outer surface of the AF holder **410.** The AF magnet **720** may be fixed to the AF holder **410.** The AF magnet **720** may be coupled to the AF holder **410.** The AF magnet **720** may be attached to the AF holder **410** with an adhesive. The AF magnet **720** may be disposed inside the cover **140.** The AF magnet **720** may interact with the AF coil **710.** The AF magnet **720** can electromagnetically interact with the AF coil **710.** The AF magnet **720** can be disposed at a position corresponding to the AF coil **710.** The AF magnet **720** and the AF coil **710** can face each other. The AF magnet **720** can face the AF coil **710.** The AF magnet **720** can be overlapped with the AF coil **710** in a direction perpendicular to the optical axis.

The AF magnet **720** can be disposed in the hole **311** of the OIS-x holder **310.** The AF magnet **720** can be overlapped with the OIS-x holder **310** in a y-axis direction. The AF magnet **720** can be overlapped with the OIS-x holder **310** in an optical axis direction.

The AF magnet **720** may be a four-pole magnet. The AF magnet **720** may comprise a four-pole magnetizing magnet. The AF magnet **720** may comprise a first magnet unit comprising an N pole and an S pole, and a second magnet unit comprising an N pole and an S pole. The first magnet unit and the second magnet unit may be disposed in a vertical direction. The first magnet unit and the second magnet unit may be disposed to be spaced apart from each other in a vertical direction, and a neutral portion may be disposed between the first magnet unit and the second magnet unit.

The lens-driving device **10** may comprise an AF sensor **730.** The AF drive unit **700** may comprise an AF sensor **730.** The AF sensor **730** may be disposed in the substrate **120.** The AF sensor **730** may comprise a Hall element (Hall IC). The AF sensor **730** may comprise a Hall sensor. The AF sensor **730** may detect the AF magnet **720.** The AF sensor **730** may detect the magnetic force of the AF magnet **720.** The AF sensor **730** may detect the movement of the AF magnet **720.** The movement amount or position of the AF magnet **720** detected by the AF sensor **730** may be used for feedback of auto focus (AF).

The AF sensor **730** may be disposed inside the AF coil **710.** The AF sensor **730** may be overlapped with the AF coil **710** in an optical axis direction. The AF sensor **730** may be overlapped with the neutral portion of the AF magnet **720** in an x-axis direction. In a modified embodiment, the AF sensor **730** may be disposed at the outside of the AF coil **710.** The AF sensor **730** may face the AF magnet **720.** The AF sensor **730** may be disposed at a position corresponding to the AF magnet **720.**

The AF sensor **730** may comprise a drive IC. In this case, the drive IC may be electrically connected to the AF coil **710.** The drive IC may apply current to the AF coil **710.**

The lens-driving device **10** may comprise a guide member. The guide member may comprise a ball. The guide member may comprise a pin. The guide member may comprise a cylindrical member. The guide member may guide movement of the moving unit relative to the fixed unit **100** in a specific direction.

The lens-driving device **10** may comprise an OIS-y guide ball **810.** The OIS-y guide ball **810** may guide movement of the OIS-y holder **210** with respect to the base **110** in a y-axis direction. The OIS-y guide ball **810** may be disposed between the OIS-y moving unit **200** and the fixed unit **100** in an x-axis direction. The OIS-y guide ball **810** may be disposed between the base **110** and the OIS-y holder **210.** The OIS-y guide ball **810** may be disposed between the base **110** and the OIS-y holder **210** in an x-axis direction. The OIS-y guide ball **810** may be disposed in a groove **113** of the base **110.** The entire region from a lower end portion of the OIS-y guide ball **810** to an upper end may be overlapped with both the base **110** and the OIS-y holder **210** in an x-axis direction. The entire region of the OIS-y guide ball **810** may be overlapped with both the base **110** and the OIS-y holder **210** in an x-axis direction. The OIS-y guide ball **810** may be disposed between the inner surface of the base **110** and the outer surface of the OIS-y holder **210.** When viewed from an outer side of the OIS-y holder **210,** the OIS-y guide ball **810** may be overlapped with the OIS-y magnet **520** in a horizontal direction. At least a portion of the OIS-y guide ball **810** may be overlapped with the OIS-y magnet **520** in a y-axis direction.

The OIS-y guide ball **810** can be disposed between the groove **113** of the fixed unit **100** and the first groove **212** of the OIS-y moving unit **200.** At least one of the groove **113** of the fixed unit **100** and the first groove **212** of the OIS-y moving unit **200** can be extended in a y-axis direction longer than the diameter of the OIS-y guide ball **810.**

The OIS-y guide ball **810** may be disposed in the groove **113** of the base **110.** The OIS-y guide ball **810** may be disposed in the first groove **212** of the OIS-y holder **210.** The OIS-y guide ball **810** may comprise a first-first ball being in contact with the base **110** and the OIS-y holder **210** at four points, and a first-second ball being in contact with the base **110** and the OIS-y holder **210** at three points. The OIS-y guide ball **810** may be spherical. The OIS-y guide ball **810** may be formed of metal. Grease may be applied to the surface of the OIS-y guide ball **810.**

The OIS-y guide ball **810** may comprise a plurality of balls. The OIS-y guide ball **810** may comprise four balls. Two OIS-y guide balls **810** may be disposed on one side of the OIS-y magnet **520,** and the remaining two OIS-y guide balls **810** may be disposed on the other side of the OIS-y magnet **520.**

The lens-driving device **10** may comprise an OIS-x guide ball **820.** The OIS-x guide ball **820** may guide movement of the OIS-x holder **310** against the OIS-y holder **210** in an x-axis direction. The OIS-x guide ball **820** may be disposed between the OIS-y holder **210** and the OIS-x holder **310.** The OIS-x guide ball **820** may be disposed between the OIS-y holder **210** and the OIS-x holder **310** in a y-axis direction. The entire region from a lower end portion of the OIS-x guide ball **820** to an upper end may be overlapped with both the OIS-y holder **210** and the OIS-x holder **310** in a y-axis direction. The entire region of the OIS-x guide ball **820** may be overlapped with the OIS-y holder **210** and the OIS-x holder **310** in a y-axis direction. The OIS-x guide ball **820** may be disposed between the inner surface of the OIS-y holder **210** and the outer surface of the OIS-x holder **310.** When viewed from the outer side of the OIS-x holder **310,** the OIS-x guide ball **820** may be overlapped with the OIS-x magnet **620** in a horizontal direction. At least a portion of the OIS-x guide ball **820** may be overlapped with the OIS-x magnet **620** in an x-axis direction.

The OIS-x guide ball **820** can be disposed between the second groove **213** of the OIS-y moving unit **200** and the first groove **312** of the OIS-x moving unit **300.** At least one of the second groove **213** of the OIS-y moving unit **200** and the first groove **312** of the OIS-x moving unit **300** can be extended in an x-axis direction longer than the diameter of the OIS-x guide ball **820.**

The OIS-x guide ball **820** may be disposed in the second groove **213** of the OIS-y holder **210.** The OIS-x guide ball **820** may be disposed in the first groove **312** of the OIS-x holder **310.** The OIS-x guide ball **820** may comprise a first-first ball being in contact with the OIS-y holder **210** and the OIS-x holder **310** at four points, and a first-second ball being in contact with the OIS-y holder **210** and the OIS-x holder **310** at three points. The OIS-x guide ball **820** may be spherical. The OIS-x guide ball **820** may be formed of metal. Grease may be applied to the surface of the OIS-x guide ball **820.**

The OIS-x guide ball **820** may comprise multiple balls. The OIS-x guide ball **820** may comprise four balls. Two OIS-x guide balls **820** may be disposed on one side of the OIS-x magnet **620** and the remaining two OIS-x guide balls **820** may be disposed on the other side of the OIS-x magnet **620.**

The lens-driving device **10** may comprise an AF guide ball **830.** The AF guide ball **830** may guide movement of the AF holder **410** against the OIS-x holder **310** in an optical axis direction. The AF guide ball **830** may be disposed between the OIS-x holder **310** and the AF holder **410.** The AF guide ball **830** may be disposed between the OIS-x holder **310** and the AF holder **410** in an x-axis direction. The AF guide ball **830** may be disposed between the inner side surface of the OIS-x holder **310** and the outer side surface of the AF holder **410.** When viewed from the outer side of the AF holder **410,** the AF guide ball **830** may be overlapped with the AF magnet **720** in a horizontal direction. When viewed from the top, at least a portion of the AF guide ball **830** may be overlapped with the AF magnet **720** in a y-axis direction. At least a portion of the AF guide ball **830** may be overlapped with the AF magnet **720** in a y-axis direction.

The AF guide ball **830** may be disposed between the second groove **213** of the OIS-x moving unit **300** and the groove **411** of the AF moving unit **400.** At least one of the second groove **213** of the OIS-x moving unit **300** and the groove **411** of the AF moving unit **400** may be extended longer than the diameter of the AF guide ball **830** in an optical axis direction.

The AF guide ball **830** may be disposed in the second groove **313** of the OIS-x holder **310.** The AF guide ball **830** may be disposed in the groove **411** of the AF holder **410.** The AF guide ball **830** may comprise a first-first ball being in contact with the OIS-x holder **310** and the AF holder **410** at four points, and a first-second ball being in contact with the OIS-x holder **310** and the AF holder **410** at three points. The AF guide ball **830** may be spherical. The AF guide ball **830** may be formed of metal. Grease may be applied to the surface of the AF guide ball **830.**

The AF guide ball **830** may comprise a plurality of balls. The AF guide ball **830** may comprise six balls. Three AF guide balls **830** may be disposed on one side of the AF magnet **720** and the remaining three AF guide balls **830** may be disposed on the other side of the AF magnet **720.**

Hereinafter, the configuration of a lens-driving device according to a modified embodiment is described with reference to the drawings.

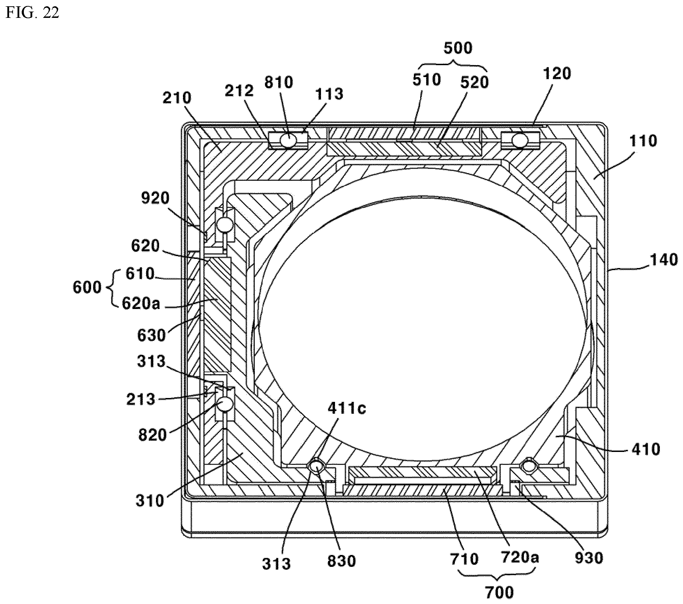

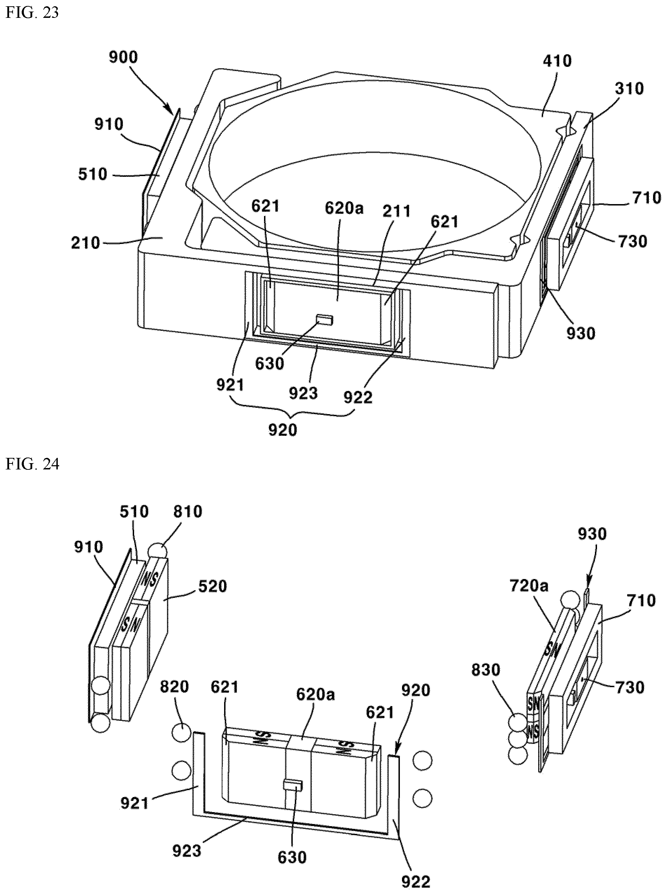

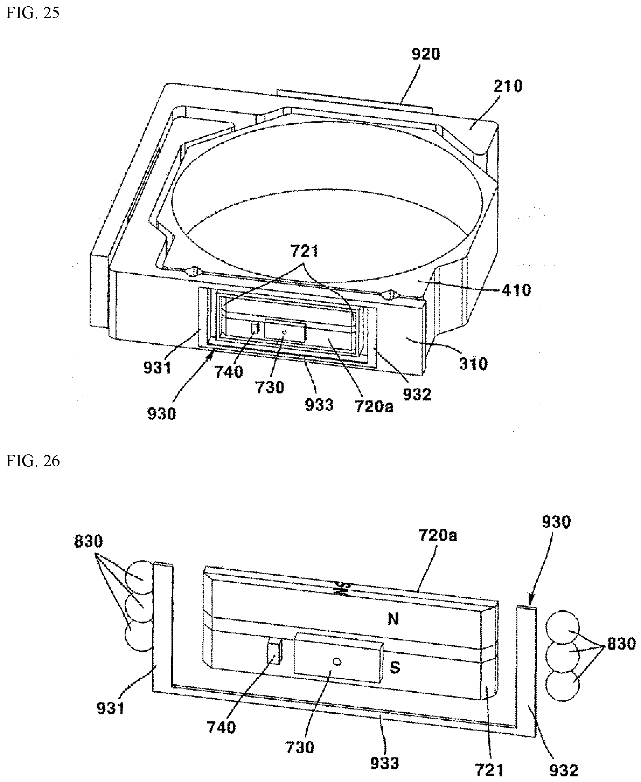

FIG. 22 is a cross-sectional perspective view of a lens-driving device according to a modified embodiment. FIG. 23 is a perspective view illustrating a moving unit and related components of a lens-driving device according to a modified embodiment. FIG. 24 is a perspective view illustrating a coil, a magnet, a yoke, a ball, and a sensor of a lens-driving device according to a modified embodiment. FIG. 25 is a perspective view illustrating a moving unit and related components of a lens-driving device according to a modified embodiment from a different direction than FIG. 23. FIG. 26 is a perspective view illustrating an AF magnet, an AF yoke, an AF guide ball, and an AF sensor of a lens-driving device according to a modified embodiment.

Hereinafter, the configuration of the lens-driving device **10** according to a modified embodiment will be described with a focus on the differences from the previous embodiment. Therefore, the technical configuration of the lens-driving device **10** according to the modified embodiment that is not described hereinafter can be applied analogically to the description in the previous embodiment.

In the lens-driving device **10** according to a modified embodiment, the shape and position of the OIS-x yoke **920** and the AF yoke **930** may be changed compared to the previous embodiment. In addition, in the lens-driving device **10** according to the modified embodiment, the OIS-x magnet **620a** and the AF magnet **720a** may additionally comprise chamfer surfaces **621** and **721** compared to the previous embodiment.

The lens-driving device **10** may comprise an attractive force member. The attractive force member may be a pressure member. The attractive force member may be a ball pressure member. A magnet and an attractive force may act on the attractive force member.

The lens-driving device **10** may comprise a yoke **900.** The attractive force member may comprise the yoke **900.** The yoke **900** may be formed of metal. An attractive force may be generated between the yoke **900** and the magnets **520, 620a,** and **720a.** The balls **810, 820,** and **830** may be pressed by the attractive force between the yoke **900** and the magnets **520, 620a,** and **720a.**

The lens-driving device **10** may comprise an OIS-y yoke **910.** The attractive force member may comprise the OIS-y yoke **910.** The yoke **900** may comprise the OIS-y yoke **910.** The OIS-y yoke **910** may be disposed on the fixed unit **100.** An attractive force may act between the OIS-y yoke **910** and the OIS-y magnet **520.** The OIS-y yoke **910** may be disposed in the substrate **120.** The OIS-y yoke **910** may be disposed in a first portion of the substrate **120.** The OIS-y yoke **910** may be disposed on an outer surface of a first portion of the substrate **120.** The OIS-y yoke **910** may be disposed in the base **110.** The OIS-y yoke **910** may be disposed in the cover **140.** The OIS-y yoke **910** may be disposed at a position corresponding to the OIS-y magnet **520.** An attractive force may be generated between the OIS-y yoke **910** and the OIS-y magnet **520.** The OIS-y guide ball **810** may be pressed by the attractive force between the OIS-y yoke **910** and the OIS-y magnet **520.** The OIS-y guide ball **810** may be pressed between the OIS-y holder **210** and the base **110** by the attractive force between the OIS-y yoke **910** and the OIS-y magnet **520.**

In a modified embodiment, the OIS-y yoke **910** may be redisposed with a magnet. That is, the lens-driving device **10** may comprise an OIS-y attractive force magnet. An attractive force may act between the OIS-y attractive force magnet and the OIS-y magnet **520.**

The lens-driving device **10** may comprise an OIS-x yoke **920.** The attractive force member may comprise the OIS-x yoke **920.** The yoke **900** may comprise the OIS-x yoke **920.** The OIS-x yoke **920** may be disposed in the OIS-y moving unit **200.** The OIS-x yoke **920** may be disposed in the OIS-y holder **210.** The OIS-x yoke **920** may be disposed on an outer surface of the OIS-y holder **210.** The OIS-x yoke **920** may be disposed in a groove of the OIS-y holder **210.** The OIS-y holder **210** may comprise a groove in which the OIS-x yoke **920** is disposed. The OIS-y holder **210** may comprise a groove having a shape corresponding to the OIS-x yoke **920.**

The OIS-x yoke **920** being disposed in the fixed unit **100** in the present modified embodiment may be disposed in the OIS-y moving unit **200** in a modified embodiment. In a modified embodiment, there may not be a significant change in the attractive force between the OIS-x yoke and the OIS-x magnet compared to the present modified embodiment. Nevertheless, there is an advantage in that the attractive force between the OIS-x yoke and the OIS-x magnet does not act as a resistance to the handshake correction drive in a y-axis direction. More specifically, in the present modified embodiment, the attractive force between the OIS-x yoke **132** and the OIS-x magnet **620** presses the OIS-x magnet **620** toward the fixed unit **100,** so it may act as a resistance to the handshake correction driving in a y-axis direction. However, in a modified embodiment, the attractive force between the OIS-x yoke **920** and the OIS-x magnet **620a** presses the OIS-x magnet **620a** toward the OIS-y holder **210,** but the OIS-y holder **210** moves in a y-axis direction, so it may not act as resistance.

The OIS-x yoke **920** can be disposed at a position corresponding to the OIS-x magnet **620a.** The OIS-x yoke **920** can exert an attractive force on the OIS-x magnet **620a.** An attractive force can be generated between the OIS-x yoke **920** and the OIS-x magnet **620a.** The OIS-x guide ball **820** can be pressurized by the attractive force between the OIS-x yoke **920** and the OIS-x magnet **620a.** The OIS-x guide ball **820** can be pressurized between the OIS-x holder **310** and the OIS-y holder **210** by the attractive force between the OIS-x yoke **920** and the OIS-x magnet **620a.**

The OIS-x yoke **920** may comprise a first portion **921** disposed at one side of the OIS-x magnet **620a** in an x-axis direction. The first portion **921** may be disposed to be long in an optical axis direction. The first portion **921** and the second portion **922** may be disposed parallel to an optical axis. The length of the first portion **921** in an optical axis direction may be longer than the length of the OIS-x magnet **620a** in an optical axis direction. Alternatively, the length of the first portion **921** in an optical axis direction may be the same as the length of the OIS-x magnet **620a** in an optical axis direction.

The OIS-x yoke **920** may comprise a second portion **922** disposed on the other side of the OIS-x magnet **620a** in an x-axis direction. The second portion **922** may be disposed to be long in an optical axis direction. The second portion **922** may be disposed parallel to an optical axis. The length of the second portion **922** in an optical axis direction may be longer than the length of the OIS-x magnet **620a** in an optical axis direction. Alternatively, the length of the second portion **922** in an optical axis direction may be the same as the length of the OIS-x magnet **620a** in an optical axis direction.

The OIS-x yoke **920** may comprise a third portion **923** connecting the first portion **921** and the second portion **922.** The third portion **923** of the OIS-x yoke **920** may be in connect with a lower end portion of the first portion **921** and a lower end portion of the second portion **922.** In a modified embodiment, the third portion **923** may be omitted. In another modified embodiment, the third portion **923** of the OIS-x yoke **920** may connect an upper end portion of the first portion **921** and an upper end portion of the second portion **922.**

In a modified embodiment, the OIS-x yoke **920** can be redisposed with a magnet. That is, the lens-driving device **10** can comprise an OIS-x attractive force magnet. Attractive force can act between the OIS-x attractive force magnet and the OIS-x magnet **620a.**

The OIS-x magnet **620a** may comprise a chamfered surface **621** being formed at a corner closest to the first portion **921** of the OIS-x yoke **920.** The OIS-x magnet **620a** may comprise a chamfered surface **621** being formed at a corner closest to the second portion **922** of the OIS-x yoke **920.** The attractive force between the OIS-x magnet **620a** and the OIS-x yoke 920 may be strengthened through the chamfered surface **621.**

The OIS-x yoke **920** may be overlapped with the OIS-x magnet **620a** in an x-axis direction. Alternatively, in a modified embodiment, the OIS-x yoke **920** may not be overlapped with the OIS-x magnet **620a** in an x-axis direction.

The lens-driving device **10** may comprise an AF yoke **930.** The attractive force member may comprise the AF yoke **930.** The yoke **900** may comprise the AF yoke **930.** The AF yoke **930** may be disposed in the OIS-x moving unit **300.** The AF yoke **930** may be disposed in the OIS-x holder **310.** The AF yoke **930** may be disposed on an outer surface of the OIS-x holder **310.** The AF yoke **930** may be disposed in a groove of the OIS-x holder **310.** The OIS-x holder **310** may comprise a groove in which the AF yoke 930 is disposed. The OIS-x holder **310** may comprise a groove having a shape corresponding to the AF yoke **930.**

In the present modified embodiment, the AF yoke **930** being disposed in the fixed unit **100** may be disposed in the OIS-x moving unit **300** in a modified embodiment. In a modified embodiment, there may not be a significant change in the attractive force between the AF yoke and the AF magnet compared to the present modified embodiment. Nevertheless, there is an advantage in that the attractive force between the AF yoke and the AF magnet does not act as a resistance to the handshake correction driving in an x-axis direction. More specifically, in the present modified embodiment, the attractive force between the AF yoke **133** and the AF magnet **720** presses the AF magnet **720** toward the fixed unit **100,** so it may act as a resistance to the shake correction drive in a y-axis direction. However, in a modified embodiment, the attractive force between the AF yoke **930** and the AF magnet **720a** presses the AF magnet **720a** toward the OIS-x holder **310,** but since the OIS-x holder **310** moves in an x-axis direction, so it may not act as resistance.

The AF yoke **930** may be disposed at a position corresponding to the AF magnet **720a.** The AF yoke **930** may exert an attractive force on the AF magnet **720a.** Attractive force may be generated between the AF yoke **930** and the AF magnet **720a.** The AF guide ball **830** may be pressed by the attractive force between the AF yoke **930** and the AF magnet **720a.** The AF guide ball **830** may be pressed between the OIS-x holder **310** and the AF holder **410** by the attractive force between the AF yoke **930** and the AF magnet **720a.**

The AF yoke **930** may comprise a first portion **931** disposed on one side of the AF magnet **720a** in the y-axis direction. The first portion **931** may be disposed to be long in the optical axis direction. The first portion **931** and the second portion **932** may be disposed parallel to each other. The first portion **931** and the second portion **932** may be disposed parallel to the optical axis. The length of the first portion **931** in an optical axis direction may be longer than the length of the AF magnet **720a** in an optical axis direction. Alternatively, the length of the first portion **931** in an optical axis direction may be equal to the length of the AF magnet **720a** in an optical axis direction.

The AF yoke **930** may comprise a second portion **932** being disposed on the other side of the AF magnet **720a** in a y-axis direction. The second portion **932** may be disposed to be long in an optical axis direction. The second portion **932** may be disposed parallel to an optical axis. The length of the second portion **932** in an optical axis direction may be longer than the length of the AF magnet **720a** in an optical axis direction. Alternatively, the length of the second portion **932** in an optical axis direction may be equal to the length of the AF magnet **720a** in an optical axis direction.

The AF yoke **930** may comprise a third portion **933** connecting the first portion **931** and the second portion **932.** The third portion **933** of the AF yoke **930** may connect a lower end portion of the first portion **931** and a lower end portion of the second portion **932.** In a modified embodiment, the third portion **933** may be omitted. In another modified embodiment, the third portion **933** of the AF yoke **930** may connect the upper end portion of the first portion **931** and the upper end portion of the second portion **932.**

In a modified embodiment, the AF yoke **930** may be redisposed with a magnet. That is, the lens-driving device **10** may comprise an AF attraction force magnet. An attraction force may be applied between the AF attraction force magnet and the AF magnet **720a.**

The AF magnet **720a** may comprise a chamfer surface **721** being formed at a corner closest to the first portion **931** of the AF yoke **930.** The AF magnet **720a** may comprise a chamfer surface **721** being formed at a corner closest to the second portion **932** of the AF yoke **930.** The attractive force between the AF magnet **720a** and the AF yoke **930** may be strengthened through the chamfer surface **721.**

The AF yoke **930** may not be overlapped with the AF magnet **720a** in a y-axis direction. Alternatively, in a modified embodiment, the AF yoke **930** may be overlapped with the AF magnet **720a** in a y-axis direction.

Hereinafter, the auto focus (AF) operation of the lens-driving device according to the modified embodiment is described with reference to the drawings.

FIGS. 27 to 29 are diagrams for explaining an auto focus driving of a lens-driving device according to the present embodiment. FIG. 27 is a cross-sectional view illustrating an appearance of the AF moving unit in an initial state in which no current is applied to an AF coil. FIG. 28 is a cross-sectional view illustrating an appearance in which an AF moving unit moves upward in an optical axis direction when a forward current is applied to an AF coil. FIG. 29 is a cross-sectional view illustrating an appearance in which an AF moving unit moves downward in an optical axis direction when a reverse current is applied to an AF coil.

The moving unit may be disposed at a position spaced apart from both the upper plate **141** of the cover **140** and the base **110** in the initial position where no current is applied to the AF coil **710.** At this time, the moving unit may be an AF moving unit **400.**

When a positive current is applied to the AF coil **710,** the AF magnet **720** can move upward in an optical axis direction due to the electromagnetic interaction between the AF coil **710** and the AF magnet **720** (see **A** of FIG. 28). At this time, the AF holder **410** can move upward in an optical axis direction together with the AF magnet **720.** Furthermore, the lens can move upward in an optical axis direction together with the AF holder **410.** Accordingly, the distance between the lens and the image sensor can be changed, and the focus of the image being formed on the image sensor through the lens can be adjusted.

When a reverse current is applied to the AF coil **710,** the AF magnet **720** can move downward in an optical axis direction due to the electromagnetic interaction between the AF coil **710** and the AF magnet **720** (see **B** of FIG. 29). At this time, the AF holder **410** can move downward in an optical axis direction together with the AF magnet **720.** Furthermore, the lens can move downward in an optical axis direction together with the AF holder **410.** Accordingly, the distance between the lens and the image sensor can be changed, and the focus of the image being formed on the image sensor through the lens can be adjusted.

Meanwhile, during the movement process of the AF magnet **720,** the AF sensor **730** can detect the strength of the magnetic field of the AF magnet **720** to detect the amount of movement or position of the AF magnet **720.** The amount of movement or position of the AF magnet **720** detected by the AF sensor **730** can be used for auto focus feedback control.

Hereinafter, the optical image stabilization (OIS) operation of the lens-driving device according to the modified embodiment is described with reference to the drawings.

FIGS. 30 to 32 are diagrams for explaining a handshake correction driving of a lens-driving device according to the present embodiment. FIG. 30 is a cross-sectional view illustrating the appearance of a moving unit in an initial state in which no current is applied to an OIS-y coil and an OIS-x coil. FIG. 31 is a cross-sectional view illustrating an appearance in which an OIS-x moving unit, an OIS-y moving unit, and an AF moving unit that have been moved in a y-axis direction perpendicular to the optical axis when current is applied to an OIS-y coil. FIG. 32 is a cross-sectional view illustrating an appearance in which an OIS-x moving unit and an AF moving unit that have been moved in an x-axis direction perpendicular to the optical axis when current is applied to an OIS-x coil.

As illustrated in FIG. 30, the moving unit may be disposed at an initial position where no current is applied to the OIS-y coil **510** and the OIS-x coil **610.** At this time, the moving unit may be the OIS-y moving unit **200** and the OIS-x moving unit **300.** In addition, the moving unit may comprise the OIS-y moving unit **200,** the OIS-x moving unit **300,** and the AF moving unit **400.**

When a current is applied to the OIS-y coil **510,** the OIS-y magnet **520** can move in a y-axis direction perpendicular to the optical axis due to the electromagnetic interaction between the OIS-y coil **510** and the OIS-y magnet **520** (see **A** of FIG. 31). At this time, the OIS-y holder **210** can move in a y-axis direction together with the OIS-y magnet **520.** Furthermore, the OIS-x holder **310,** the AF holder **410,** and the lens can move in a y-axis direction together with the OIS-y holder **210.** In more detail, when a forward current is applied to the OIS-y coil **510,** the OIS-y magnet **520,** the OIS-y holder **210,** the OIS-x holder **310,** the AF holder **410,** and the lens can move in one direction along a y-axis. In addition, when a reverse current is applied to the OIS-y coil **510,** the OIS-y magnet **520,** the OIS-y holder **210,** the OIS-x holder **310,** the AF holder **410,** and the lens can move in the other direction along an x-axis.

When a current is applied to the OIS-x coil **610,** the OIS-x magnet **620** can move in an x-axis direction perpendicular to the optical axis due to the electromagnetic interaction between the OIS-x coil **610** and the OIS-x magnet **620** (see **B** of FIG. 32). At this time, the OIS-x holder **310** can move in an x-axis direction together with the OIS-x magnet **620.** Furthermore, the AF holder **410** and the lens can move in an x-axis direction together with the OIS-x holder **310.** In more detail, when a positive current is applied to the OIS-x coil **610,** the OIS-x magnet **620,** the OIS-x holder **310,** the AF holder **410,** and the lens can move in one direction along an x-axis. In addition, when a reverse current is applied to the OIS-x coil **610,** the OIS-x magnet **620,** the OIS-x holder **310,** the AF holder **410,** and the lens can move in the other direction along the x-axis.

Meanwhile, the OIS-y sensor **530** can detect the amount of movement or position of the OIS-y magnet **520** by detecting the strength of the magnetic field of the OIS-y magnet **520.** The amount of movement or position of the OIS-y magnet **520** detected by the OIS-y sensor **530** can be used for y-axis direction handshake correction feedback control. The OIS-x sensor **630** can detect the amount of movement or position of the OIS-x magnet **620** by detecting the strength of the magnetic field of the OIS-x magnet **620.** The amount of movement or position of the OIS-x magnet **620** detected by the OIS-x sensor **630** can be used for x-axis direction handshake correction feedback control.

Hereinafter, a camera device according to the present modified embodiment is described with reference to the drawings.

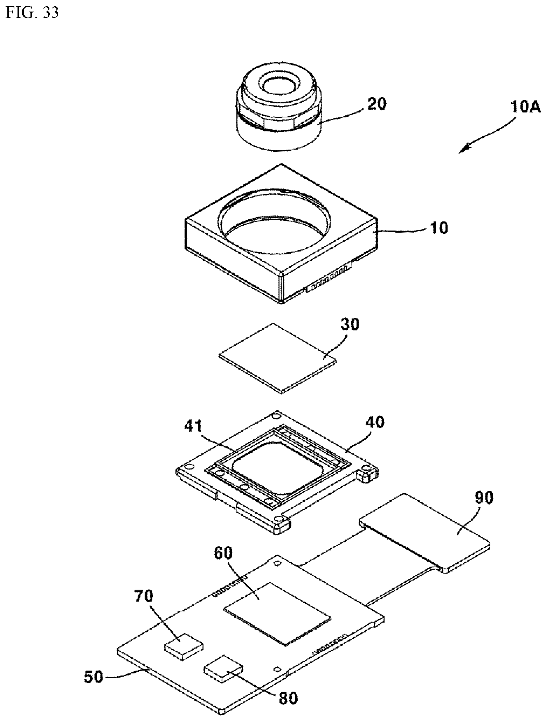

FIG. 33 is an exploded perspective view of a camera device according to the present embodiment.

The camera device **10A** may comprise a camera module.

The camera device **10A** may comprise a lens module **20.** The lens module **20** may comprise at least one lens. The lens may be disposed at a position corresponding to the image sensor **60.** The lens module **20** may comprise a lens and a barrel. The lens module **20** may be coupled to an AF holder **410** of the lens-driving device **10.** The lens module **20** may be coupled to the AF holder **410** by screw-coupling and/or adhesive. The lens module **20** may be moved integrally with the AF holder **410.**

The camera device **10A** may comprise a filter **30.** The filter **30** may block light of a specific frequency band from passing through the lens module **20** from being incident on the image sensor **60.** The filter **30** may be disposed parallel to an x-y plane. The filter **30** may be disposed between the lens module **20** and the image sensor **60.** The filter **30** may be disposed in the sensor base **40.** In a modified embodiment, the filter **30** may be disposed in the base **110.** The filter **30** may comprise an infrared filter. The infrared filter may block light in an infrared region from being incident on the image sensor **60.**

The camera device **10A** may comprise a sensor base **40.** The sensor base **40** may be disposed between the lens-driving device **10** and the printed circuit board **50.** The sensor base **40** may comprise a protruded portion **41** in which a filter **30** is disposed. An opening may be formed in a portion of the sensor base **40** in which the filter **30** is disposed so that light passing through the filter **30** may be incident on the image sensor **60.** An adhesive member may couple or attach the base **110** of the lens-driving device **10** to the sensor base **40.** The adhesive member may additionally serve to prevent foreign substances from entering the interior of the lens-driving device **10.** The adhesive member may comprise at least one among an epoxy, a thermosetting adhesive, and an ultraviolet-curable adhesive.

The camera device **10A** may comprise a printed circuit board (PCB) **50.** The printed circuit board **50** may be a substrate or a circuit board. A lens-driving device **10** may be disposed in the printed circuit board **50.** A sensor base **40** may be disposed between the printed circuit board **50** and the lens-driving device **10.** The printed circuit board **50** may be electrically connected to the lens-driving device **10.** An image sensor **60** may be disposed in the printed circuit board **50.** Various circuits, elements, control units, and the like may be provided in the printed circuit board **50** to convert an image formed on the image sensor **60** into an electrical signal and transmit it to an external device.

The camera device **10A** may comprise an image sensor **60.** The image sensor **60** may be configured such that light passing through a lens and a filter **30** is incident to form an image. The image sensor **60** may be mounted on a printed circuit board **50.** The image sensor **60** may be electrically connected to the printed circuit board **50.** For example, the image sensor **60** may be coupled to the printed circuit board **50** by surface mounting technology (SMT). As another example, the image sensor **60** may be coupled to the printed circuit board **50** by flip chip technology. The image sensor **60** may be disposed such that its optical axis is aligned with that of the lens. That is, the optical axis of the image sensor **60** and the optical axis of the lens may be aligned. The image sensor **60** can convert light being irradiated to the effective image area of the image sensor **60** into an electrical signal. The image sensor **60** can be any one among a charge coupled device (CCD), a metal oxide semi-conductor (MOS), a CPD, and a CID.

The camera device **10A** may comprise a motion sensor **70.** The motion sensor **70** may be mounted on a printed circuit board **50.** The motion sensor **70** may be electrically connected to a control unit **80** through a circuit pattern provided in the printed circuit board **50.** The motion sensor **70** may output rotational velocity information due to the movement of the camera device **10A.** The motion sensor **70** may comprise a two-axis or three-axis gyro sensor or an angular velocity sensor.

The camera device **10A** may comprise a control unit **80.** The control unit **80** may be disposed in a printed circuit board **50.** The control unit **80** may be electrically connected to a coil **330** of a lens-driving device **10.** The control unit **80** may individually control the direction, intensity, and amplitude of current supplied to the coil **330.** The control unit **80** may control the lens-driving device **10** to perform an auto-focus function and/or a handshake correction function. Furthermore, the control unit **80** may perform auto-focus feedback control and/or handshake correction feedback control for the lens-driving device **10.**

The camera device **10A** may comprise a connector **90.** The connector **90** may be electrically connected to a printed circuit board **50.** The connector **90** may comprise a port for being electrically connected to an external device.

Hereinafter, an optical device according to the present modified embodiment is described with reference to drawings.

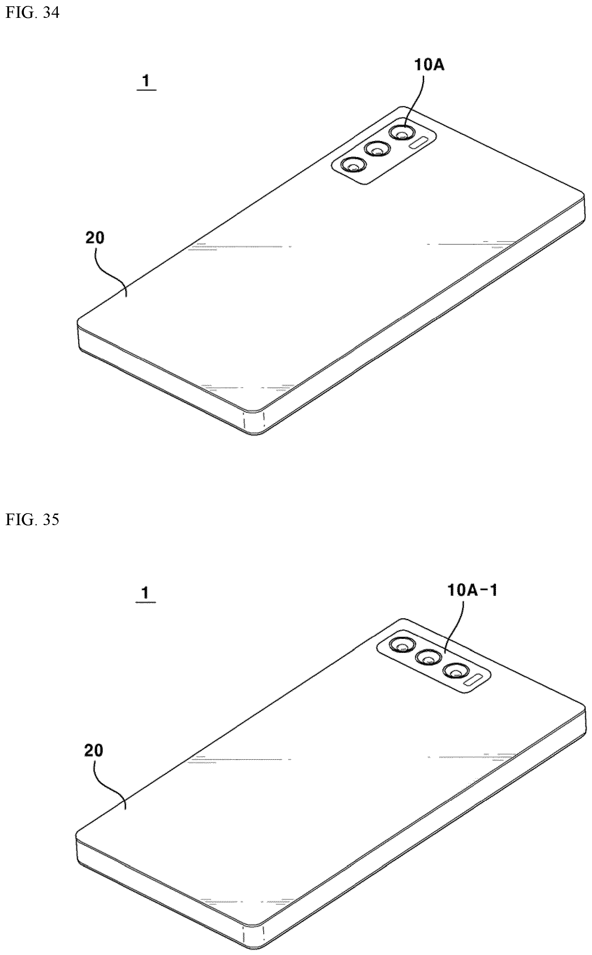

FIG. 34 is a perspective view of an optical device according to the present embodiment; and FIG. 35 is a perspective view of an optical device according to a modified embodiment.

The optical device **1** may comprise any one or more among a mobile phone, a cellular phone, a portable terminal, a mobile terminal, a smart phone, a smart pad, a portable smart device, a digital camera, a laptop computer, a digital broadcasting terminal, a personal digital assistant (PDA), a portable multimedia player (PMP), and a navigation device. The optical device **1** may comprise any device for photographing images or pictures.

The optical device **1** may comprise a main body **20.** The optical device **1** may comprise a camera device **10A.** The camera device **10A** may be disposed in the main body **20.** The camera device **10A** may photograph a subject. The optical device **1** may comprise a display. The display may be disposed in the main body **20.** The display may output one or more of an image and a video photographed by the camera device **10A.** The display may be disposed on a first surface of the main body **20.** The camera device **10A** may be disposed on one or more of the first surface of the main body **20** and the second surface opposite to the first surface. As illustrated in FIG. 34, the camera device **10A** may have a triple camera disposed in a vertical direction. As illustrated in FIG. 35, the camera device **10A-1** may have a triple camera disposed in a horizontal direction.

Although the present modified embodiment of the present invention has been described with reference to the attached drawings, those skilled in the art will understand that the present invention can be implemented in other specific forms without changing the technical idea or essential characteristics thereof. Therefore, it should be understood that the modified embodiments described above are exemplary in all respects and not restrictive.

## Claims

1. A lens-driving device comprising:
a fixed unit;
a first moving unit disposed in the fixed unit;
a second moving unit disposed in the first moving unit;
a third moving unit disposed in the second moving unit;
a first drive unit configured to move the first moving unit in a first direction perpendicular to an optical axis direction;
a second drive unit configured to move the second moving unit in a second direction perpendicular to the optical axis direction and the first direction; and
a third drive unit configured to move the third moving unit in the optical axis direction.

2. The lens-driving device of claim 1, wherein when the first moving unit is moved by the first drive unit, the second moving unit and the third moving unit are configured to move together with the first moving unit.

3. The lens-driving device of claim 1, wherein when the second moving unit is moved by the second drive unit, the third moving unit is configured to move together with the second moving unit.

4. The lens-driving device of claim 1, wherein the third drive unit comprises a third coil and a third magnet interacting with each other, and
wherein when the second moving unit and the third moving unit are moved by the second drive unit, a distance between facing surfaces of the third coil and the third magnet is changed.

5. The lens-driving device of claim 1, comprising:
a first ball disposed between the first moving unit and the fixed unit in the second direction.

6. The lens-driving device of claim 5, wherein the fixed unit comprises a groove,
wherein the first moving unit comprises a first groove,
wherein the first ball is disposed between the groove of the fixed unit and the first groove of the first moving unit, and
wherein at least one of the groove of the fixed unit and the first groove of the first moving unit extends in the first direction longer than a diameter of the first ball.

7. The lens-driving device of claim 1, wherein the first moving unit comprises a first portion disposed between the second moving unit and the fixed unit in the first direction, and
wherein a second ball is disposed between the first portion of the first moving unit and the second moving unit in the first direction.

8. The lens-driving device of claim 7, wherein the first moving unit comprises a second groove formed on the first portion of the first moving unit,
wherein the second moving unit comprises a first groove,
wherein the second ball is disposed between the second groove of the first moving unit and the first groove of the second moving unit, and
wherein at least one of the second groove of the first moving unit and the first groove of the second moving unit extends in the second direction longer than a diameter of the second ball.

9. The lens-driving device of claim 1, wherein the second moving unit comprises a first portion disposed between the third moving unit and the fixed unit in the second direction, and
wherein a third ball is disposed between the first portion of the second moving unit and the third moving unit in the second direction.

10. The lens-driving device of claim 9, wherein the second moving unit comprises a second groove formed on the first portion of the second moving unit,
wherein the third moving unit comprises a groove,
wherein the third ball is disposed between the second groove of the second moving unit and the groove of the third moving unit, and
wherein at least one of the second groove of the second moving unit and the groove of the third moving unit extends longer than a diameter of the third ball in the optical axis direction.
